# EUROPÄISCHE PATENTANMELDUNG

(11) **EP 3 798 261 A1**
(43) Veröffentlichungstag der Anmeldung: **31.03.2021**
(21) Anmeldenummer: 19199724.6
(22) Anmeldetag: 26.09.2019
(51) Int. Cl.: C08L 33/08, C08L 33/26, C10L 1/14

(54) **POLYMERZUSAMMENSETZUNGEN UND IHRE VERWENDUNG ALS POUR POINT DEPRESSANT IN PARAFFINHALTIGEN KOHLENWASSERSTOFFÖLEN**

(71) Anmelder: Clariant International Ltd, 4132 Muttenz (CH)
(72) Erfinder: FEUSTEL, Michael, 55278 Köngernheim (DE); SAHL, Mike, 65520 Bad Camberg (DE); KRULL, Matthias, 55296 Harxheim (DE)
(74) Vertreter: Mikulecky, Klaus

(57) **Zusammenfassung**

Gegenstand der Erfindung ist eine Polymerzusammensetzung erhältlich durch radikalische Polymerisation von
A) 95 - 40 Gew.-% einer Monomermischung, enthaltend
Ai) 65 - 99 Gew.-% mindestens Alkyl(meth)acrylats mit einem linearen C₁₆-C₄₀-Alkylrest und
Aii) 1 - 35 Gew.-% mindestens eines aus (Meth)acrylaten und (Meth)acrylamiden ausgewählten Comonomers, das einen über eine Alkylen-, Alkenylen-, Oxyalkylen- oder Polyoxyalkylengruppe an die Estergruppe des (Meth)acrylats bzw. an die Amidgruppe des (Meth)acrylamids gebundenen, gegebenenfalls substituierten Aromatischen Rest trägt,
in Gegenwart von
B) 5 - 60 Gew.-% mindestens eines Ethylen-Copolymers,
ein Verfahren zu ihrer Herstellung sowie ihre Verwendung als Fließverbesserer für paraffinhaltige Kohlenwasserstofföle.

## Beschreibung

Gegenstand vorliegender Erfindung sind Polymerzusammensetzungen aus Copolymeren von Alkyl(meth)acrylaten, eine aromatische Gruppe tragenden (Meth)acrylaten und Ethylen-Copolymeren sowie deren Verwendung zur Verbesserung der Kaltfließeigenschaften von paraffinhaltigen Kohlenwasserstoffölen.

Rohöle wie auch die aus ihnen hergestellten Produkte wie Bunkeröle, schwere Heizöle und Destillationsrückstände sind komplexe Gemische verschiedenartiger Substanzen wie beispielsweise gesättigten und ungesättigten Kohlenwasserstoffen, Aromaten, Harzen und Asphaltenen. Bei der Abkühlung der Öle beispielsweise während Produktion, Transport, Lagerung und/oder Weiterverarbeitung können verschiedene der im Rohöl enthaltenen Substanzen Probleme bereiten. Insbesondere langkettige n-Paraffine können nach Unterschreiten einer ölspezifischen Temperatur ausfallen und ein dreidimensionales Netzwerk aus Schuppen und/oder feinen Nadeln ausbilden, in dem größere Mengen flüssiger Bestandteile eingelagert sind und festgehalten werden. Obgleich der Großteil des Öls noch flüssig ist, verliert das Öl dadurch seine Fließfähigkeit, wodurch zum Beispiel der Transport in Pipelines zum Erliegen kommen kann und in Lagertanks zwischen den insbesondere an den Tankwänden auskristallisierenden Paraffinen beträchtliche Mengen an Öl eingeschlossen werden können. Diese Problematik betrifft neben Rohölen auch die daraus hergestellten schwereren Produkte wie zum Beispiel schweres Heizöl, Schiffsdiesel, Bunkeröl und Rückstandsöle, die größere Mengen an n-Paraffinen enthalten.

Daher werden paraffinhaltigen Mineralölen für Transport und Lagerung vielfach Additive zugesetzt, die die Fließfähigkeit des Öls bei niedrigen Temperaturen verbessern sollen. Bei diesen so genannten Paraffininhibitoren handelt es sich vorwiegend um öllösliche, synthetische polymere Verbindungen. Diese modifizieren die Kristallstruktur der bei Abkühlung ausfallenden Paraffine und verhindern die Ausbildung eines dreidimensionalen Netzwerks aus Paraffinkristallen. Teilweise fördern die Additive auch die Ausbildung feiner, gut kristallisierter und nicht agglomerierender Paraffinkristalle. Da derartige Additive den Pour Point (Stockpunkt) des Öls absenken werden sie auch als Pour Point Depressanten (PPD) bzw. Stockpunkterniedriger bezeichnet. Als Pour Point wird die niedrigste Temperatur bezeichnet, bei der eine Probe eines Öls beim Abkühlen gerade noch fließt. Der Stockpunkt von Ölen kann beispielsweise mittels DIN ISO 3016 und ASTM D97 bestimmt werden.

Häufig für die Paraffininhibierung eingesetzte Wirkstoffe sind Copolymere des Ethylens sowie Poly(alkyl(meth)acrylate), die jeweils unterschiedliche Wirkmechanismen besitzen. Bei den Ethylen-Copolymeren erfolgt die Cokristallisation mit Paraffinen über die Poly(ethylen)-Sequenzen der Hauptkette, deren mittlere Länge über den Comonomergehalt des Polymers gesteuert werden kann. Bevorzugte Ethylen-Copolymere sind dabei Copolymere des Ethylens mit Vinylestern und insbesondere mit Vinylacetat. Bei den Poly(alkyl(meth)acrylaten) dagegen ist die Länge ihrer Seitenketten essentiell, die zur mittleren Kettenlänge und damit zum Kristallisationsverhalten der n-Alkane im zu additivierenden Öl passen muss. Besonders wirkungsvoll sind dabei lineare Alkylreste mit 18 und mehr C-Atomen.

Oftmals kann die paraffininhibierende Wirkung von Poly(alkyl(meth)acrylaten) durch Copolymerisation mit funktionelle Gruppen tragenden Comonomeren gesteigert werden. EP 0376138 schlägt dazu die Copolymerisation von 50 bis 99,9 Gew.-% eines (Meth)acrylsäure-C₁₄-C₂₂-alkylesters mit 50 bis 0,1 Gew.-% eines weiteren Comonomers vor. Ein beispielhaft belegtes Comonomer ist Acrylsäurebenzylester.

Zur Steigerung der paraffininhibierenden Wirkung wurden auch Mischungen von Ethylen-Polymeren mit Poly(alkyl(meth)acrylaten) vorgeschlagen. Bei der Handhabung derartiger Additivkonzentrate, die durch Mischen der Polymere hergestellt werden, tritt oftmals eine durch Polymerunverträglichkeit bedingte Phasenseparation auf, so dass eine reproduzierbare Paraffininhibierung mit solchen Additiven nicht möglich ist.

Zur Lösung des Problems der Phasenseparation wurde vorgeschlagen, die Polymerisation des Alkyl(meth)acrylats in Lösung und in Gegenwart des Ethylen-Copolymers durchzuführen. Nach allgemein akzeptierter Theorie wird dabei zumindest ein Teil der Alkyl(meth)acrylat-Monomere auf das Ethylen-Copolymer aufgepfropft, während ein weiterer Teil polymerisiert ohne aufzupfropfen und somit ein Alkyl(meth)acrylat-Homopolymer bildet. Das zumindest teilweise Pfropfen verhindert in der Folge, dass sich die Polymere im Additivkonzentrat separieren und ermöglicht somit die Behandlung des Öls mit einem immer gleich zusammengesetzten Additiv.

US 4608411 offenbart Pfropfpolymere von Poly(alkylacrylaten) auf Ethylen-Copolymere. Die zur Pfropfung eingesetzten Alkylacrylate leiten sich von Alkoholmischungen ab, die mindestens 20 Gew.-% an Alkylresten mit 22 oder mehr C-Atomen und einen Anteil an C₁₂-C₁₆-Alkoholen von weniger als 10 Gew.-% aufweisen.

EP 0384367 offenbart Mischungen aus hoch- und niedermolekularen Pfropfpolymeren von u. a. Alkyl(meth)acrylaten auf Ethylen-Vinylester-Copolymere als PPD für Brennstofföle. Zur Herstellung des zur Pfropfung eingesetzten Alkylacrylats wird beispielhaft eine Alkoholmischung aus 20 Gew.-% C₁₆-, 40 Gew.-% C₁₈-, 10 Gew.-% C₂₀- und 30 Gew.-% C₂₂-Alkoholen eingesetzt.

EP 0486836 A1 offenbart Erdölmitteldestillate, beispielsweise Gasöle, Dieselöle oder Heizöle, welche zur Verbesserung der Fließeigenschaften in der Kälte übliche Fließverbesserer auf Ethylenbasis, wie beispielsweise Copolymeren aus Ethylen und Vinylacetat, Vinylpropionat oder Ethylhexylacrylat sowie Copolymere aus linearen oder verzweigten C₈- bis C₁₈-Alkyl(meth)acrylaten und linearen oder verzweigten C₁₈- bis C₂₈-Alkylvinylethern im Gewichtsverhältnis 40 : 60 bis 95 : 5 enthalten. Die Copolymere aus Alkyl(meth)acrylaten und Alkylvinylethern und die konventionellen Fließverbesserer können als Mischung vorliegen oder die Copolymere aus den Alkyl(meth)acrylaten und/oder Alkylvinylethern können ganz oder teilweise auf die Fließverbesserer auf Ethylenbasis aufgepfropft sein.

WO 2005/023907 offenbart Pour Point Depressanten für Rohöl, die mindestens zwei Polymere ausgewählt aus i) Ethylen-Copolymeren, ii) mit n-Alkyl(meth)acrylat gepfropften Ethylen-Copolymeren und iii) (Co-)Polymeren von n-Alkyl(meth)acrylaten enthalten. Die Alkyl(meth)acrylate in Komponente ii) wie auch iii) haben 6 bis 40 und bevorzugt 14 bis 30 C-Atome im Alkylrest und können bis zu 50 % eines oder mehrerer Comonomere wie beispielsweise α-Olefine, Vinylester oder Vinylpyridin enthalten. Um Polymerunverträglichkeiten zu überwinden werden diese Mischungen als Dispersionen in Wasser formuliert.

EP 1808450 A offenbart mit Alkylacrylaten gepfropfte Copolymere aus Ethylen, Vinylacetat und einem weiteren Vinylester und deren Verwendung zur Verbesserung der Kaltfließeigenschaften von Brennstoffölen. Bevorzugte Pfropfauflagen sind Ester der Acrylsäure mit n- oder iso-C₈-C₂₂-Alkoholen.

WO 2011/035947 offenbart Zusammensetzungen, die ein Poly(alkyl(meth)acrylat) mit einem zahlenmittleren Molekulargewicht Mn von 1.000 bis 10.000 g/mol und ein von einem C₁-C₃₀-Alkyl(meth)acrylat abgeleitete Struktureinheiten enthaltendes Ethylen-Vinylacetat-Copolymer umfassen. Die Poly(alkyl(meth)acrylate) enthalten mindestens 10 Gew.-% und insbesondere 70 bis 99 Gew.-% eines oder mehrerer Alkyl(meth)acrylate mit 7 bis 15 C-Atomen im Alkylrest und maximal 40 Gew.-% an Alkyl(meth)acrylaten mit 16-40 C-Atomen im Alkylrest. Optional können sie bis zu 60 Gew.-% verschiedener weiterer Comonomere enthalten, wobei der Anteil an Comonomeren mit (hetero)aromatischen Gruppen wie beispielsweise von Benzyl(meth)acrylat wie auch mit Heteroatomen tragenden Monomeren aus ökologischen Gründen auf 1 Gew.-% und darunter beschränkt ist. Diese Zusammensetzungen werden als Fließverbesserer in Brennstoffölen und insbesondere in Biodiesel verwendet. Beispielhaft belegt sind mit C₁₂/C₁₅-Alkylmethacrylat sowie mit C₆-C₁₈-Alkylmethacrylat gepfropfte EVA-Copolymere.

Die durch Pfropfpolymerisation gemäß Stand der Technik hergestellten Paraffininhibitoren werden üblicherweise als Formulierung in organischen, vorwiegend aromatischen Lösemitteln eingesetzt. Auf Grund der für ihre Wirksamkeit erforderlichen paraffinartigen Strukturelemente und üblicherweise auch hoher Molekulargewichte besitzen konzentrierte Lösungen dieser Polymere Eigenstockpunkte, die oftmals oberhalb der bei ihrer Verwendung herrschenden Umgebungstemperaturen liegen. Problematisch ist die unzureichende Fließfähigkeit der Konzentrate oftmals schon bei Temperaturen unterhalb 25°C. Besonders problematisch wird sie gewöhnlich bei Temperaturen unterhalb 20 °C und insbesondere unterhalb 15 °C sowie speziell unterhalb 10 °C. Solch niedrige Temperaturen treten oftmals bei der Lagerung in unbeheizten Lagertanks, wie sie vielfach in abgelegenen Fördergebieten oder auch in Terminals zu finden sind als auch beim Einsatz der Additive in Tiefsee-Förderungen auf. Für den unterbrechungsfreien Einsatz bei niedrigen Temperaturen sind folglich eine starke Verdünnung der Additive und/oder ein Beheizen der Förderleitungen erforderlich. Da beides zu unerwünschtem Mehraufwand führt, wurden Vorschläge zur Absenkung des Eigenstockpunkts von Paraffininhibitoren gemacht.

WO 2014/095412 offenbart polymere Zusammensetzungen, die durch radikalische Polymerisation von Alkyl(meth)acrylaten in Gegenwart mindestens eines Ethylen-Vinylester-Copolymers erhältlich sind. Bei den eingesetzten Alkyl(meth)acrylaten handelt es sich um eine Mischung aus (A1a) 50 - 99 mol-% mindestens eines Alkyl(meth)acrylats mit einem linearen C₁₂-C₆₀-Alkylrest und (A1b) 1 bis 49 mol-% mindestens eines Alkyl(meth)acrylats mit einem linearen C₁-C₁₁-Alkylrest, einem verzweigten C₄-C₆₀-Alkylrest und/oder einem zyklischen C₅-C₂₀-Alkylrest. Diese Zusammensetzungen sind als 48 %ige Einstellungen in Toluol bei Raumtemperatur flüssig und stabil. Sie werden als Pour Point Depressanten in Rohölen, Mineralölen und Mineralölprodukten eingesetzt. Optional können die Polymere weitere Monomere A2 enthalten, die nicht der Definition für die Monomere A1a und A1b entsprechen. In der Liste optionaler Monomere werden auch (Meth)acrylate mit Phenyl-, 4-Methylphenyl-, Benzyl- und 2-Phenyl-ethylresten genannt.

WO 2017/108361 offenbart Polymerzusammensetzungen, die durch radikalische Polymerisation eines Alkyl(meth)acrylats mit 16 bis 40 C-Atomen im Alkoholrest und eines (Meth)acrylsäureesters eines in 2-Stellung zur Hydroxylgruppe einen C₆-C₂₀-Alkylrest tragenden C₈-C₂₂-Alkohols in Gegenwart eines Ethylen-Copolymers erhältlich sind. Sie werden als Pour Point Depressanten in Rohölen, Mineralölen und Mineralölprodukten eingesetzt. Optional können die Alkyl(meth)acrylate bis zu 40 Gew.-% weiterer Monomere enthalten. In der Liste der optionalen Comonomere befindet sich auch Benzylacrylat.

Gemäß WO 2014/095412 und auch WO 2017/108361 werden die Fließeigenschaften der Paraffininhibitoren bei niedrigen Temperaturen durch den Einbau von (Meth)acrylsäureestern kurzkettiger und/oder verzweigter Fettalkohole verbessert. Es hat sich jedoch gezeigt, dass die Fähigkeit derartiger Paraffininhibitoren mit kurzkettigen und/oder verzweigten Alkylresten zur Cokristallisation mit den bei Abkühlung aus paraffinhaltigen Kohlenwasserstoffölen ausfallenden n-Paraffinen schwächer ist als dies mit Paraffininhibitoren mit im Wesentlichen linearen langkettigen Alkylresten der Fall ist. Dies führt insbesondere bei höheren Anteilen an kurzkettigen und/oder verzweigten Alkylresten zu einer Abschwächung der Wirksamkeit und erfordert für die Einstellung des gewünschten Pour Points des Kohlenwasserstofföls höhere Dosierraten des Paraffininhibitors; teilweise können die mit Paraffininhibitoren mit im Wesentlichen linearen Alkylketten erreichbaren Stockpunkte jedoch nicht erreicht werden.

Es wurden folglich Paraffininhibitoren für paraffinhaltige Kohlenwasserstofföle gesucht, die als Konzentrate bei niedrigen Temperaturen von unter 20 °C, speziell unter 15 °C und insbesondere unter 10 °C fließfähig und pumpbar sind. Gleichzeitig sollen sie eine mit den bekannten Additiven zumindest vergleichbare und bevorzugt eine überlegene Wirksamkeit zeigen. Die Additive und insbesondere ihre Konzentrate sollen über einen längeren Zeitraum von mehreren Tagen bis Wochen auch bei niedrigen Lagertemperaturen ihre anwendungstechnischen sowie physikalischen Eigenschaften wie insbesondere ihre Fließfähigkeit beibehalten. Um eine möglichst umgehende Absenkung des Pour Points nach Additivierung des behandelten paraffinhaltigen Kohlenwasserstofföls zu erzielen wäre es weiterhin wünschenswert, die Einmischbarkeit der Paraffininhibitoren in das zu behandelnde Kohlenwasserstofföl insbesondere bei niedrigen Temperaturen zu verbessern. Da es bekannt ist, dass Paraffininhibitoren des Standes der Technik, und insbesondere solche, die Pfropfpolymere von Ethylen-Copolymeren und Alkyl(meth)acrylaten sind, hohe Eigenstockpunkte aufweisen war es auch Aufgabe der vorliegenden Erfindung, Paraffininhibitoren bereit zu stellen, deren Eigenstockpunkt niedrig ist.

Überraschenderweise wurde gefunden, dass Polymerzusammensetzungen, die durch radikalische Polymerisation von Mischungen aus Alkyl(meth)acrylaten, die sich von linearen C₁₆-C₄₀-Fettalkoholen ableiten und von (Meth)acrylsäurederivaten, die einen aromatischen Rest tragen, in Gegenwart von Copolymeren aus Ethylen und ungesättigten Estern zugänglich sind, auch bei niedrigen Temperaturen fließfähig und pumpbar sind und gleichzeitig eine hervorragende Stockpunktabsenkung in paraffinhaltigen Kohlenwasserstoffölen wie Rohöl und aus Rohölen hergestellten Produkten bewirken. Darüber hinaus besitzen sie insbesondere bei niedrigen Temperaturen eine verbesserte Einmischbarkeit in Kohlenwasserstofföle. Konzentrate dieser Polymerzusammensetzungen in organischen Lösemitteln bleiben auch nach längerer Lagerung fließfähig.

Erster Gegenstand der Erfindung sind Polymerzusammensetzungen, erhältlich durch radikalische Polymerisation von
A) 95 - 40 Gew.-% einer Monomermischung, enthaltend
   Ai) 65 - 99 Gew.-% mindestens Alkyl(meth)acrylats mit einem linearen C₁₆-C₄₀-Alkylrest und
   Aii) 1 - 35 Gew.-% mindestens eines aus (Meth)acrylaten und (Meth)acrylamiden ausgewählten Comonomers, das einen über eine Alkylen-, Alkenylen-, Oxyalkylen- oder Polyoxyalkylengruppe an die Estergruppe des (Meth)acrylats bzw. an die Amidgruppe des (Meth)acrylamids gebundenen, gegebenenfalls substituierten aromatischen Rest trägt,
   in Gegenwart von
B) 5 - 60 Gew.-% mindestens eines Ethylen-Copolymers.

Ein zweiter Gegenstand der Erfindung sind konzentrierte Polymerzusammensetzungen, enthaltend
I) eine durch radikalische Polymerisation von
   A) 95 - 40 Gew.-% einer Monomermischung, enthaltend
      Ai) 65 - 99 Gew.-% mindestens eines Alkyl(meth)acrylats mit einem linearen C₁₆-C₄₀ Alkylrest und
      Aii) 1 - 35 Gew.-% mindestens eines aus (Meth)acrylaten und (Meth)acrylamiden ausgewählten Comonomers, das einen über eine Alkylen-, Alkenylen-, Oxyalkylen- oder Polyoxyalkylengruppe an die Estergruppe des (Meth)acrylats bzw. an die Amidgruppe des (Meth)acrylamids gebundenen, gegebenenfalls substituierten aromatischen Rest trägt,
      in Gegenwart von
   B) 5 - 60 Gew.-% mindestens eines Ethylen-Copolymers erhältliche Polymerzusammensetzung und
II) ein organisches Lösemittel (C).

Ein dritter Gegenstand der Erfindung ist ein Verfahren zur Herstellung der Polymerzusammensetzungen, bei dem das Gemisch aus Ai und Aii in Gegenwart von B und gegebenenfalls eines organischen Lösemittels, durch Zugabe eines Radikalkettenstarters polymerisiert wird.

Ein vierter Gegenstand der Erfindung ist ein Verfahren zur Absenkung des Eigenstockpunkts von Polymerzusammensetzungen, welche Pfropfpolymere von Ethylen-Copolymeren mit Alkyl(meth)acrylaten sind, indem
A) 95 - 40 Gew.-% einer Monomermischung, die mindestens ein Alkyl(meth)acrylat Ai mit einem linearen C₁₆-C₄₀-Alkylrest in einer Menge von 65-99 Gew.-%, bezogen auf das Gesamtgewicht der Monomermischung A), enthält, in Gegenwart von
B) 5 - 60 Gew.-% mindestens eines Ethylen-Copolymers, radikalisch polymerisiert wird, dadurch gekennzeichnet, dass
   der Monomermischung A) 1 bis 35 Gew.-%, bezogen auf das Gesamtgewicht der Monomermischung A), mindestens eines aus (Meth)acrylaten und (Meth)acrylamiden ausgewählten Comonomers Aii, das einen über eine Alkylen-, Alkenylen-, Oxyalkylen- oder Polyoxyalkylengruppe an die Ester bzw. Amidgruppe des (Meth)acrylats oder (Meth)acrylamids gebundenen, gegebenenfalls substituierten aromatischen Rest trägt, vor der radikalischen Polymerisation zugesetzt werden.

Ein fünfter Gegenstand der Erfindung ist die Verwendung der Polymerzusammensetzungen gemäß erstem Gegenstand der Erfindung zur Verbesserung der Kälteeigenschaften, wie beispielsweise der Absenkung des Pour Points und/oder der Verbesserung der Paraffindispergierung, in paraffinhaltigen Kohlenwasserstoffölen.

Ein sechster Gegenstand der Erfindung sind paraffinhaltige Kohlenwasserstofföle mit verbesserten Kälteeigenschaften enthaltend eine Polymerzusammensetzung gemäß erstem Gegenstand der Erfindung.

Ein siebter Gegenstand der Erfindung ist die Verwendung eines Comonomers Aii) zur Absenkung des Eigenstockpunkts von Polymerzusammensetzungen, welche Produkt einer Polymerisation von Alkyl(meth)acrylaten Ai) in Gegenwart von Ethylen-Copolymeren B) sind, wobei man Aii) in einer Menge von 1 bis 35 Gew.-%, bezogen auf das Gesamtgewicht der Monomermischung aus Ai) und Aii), gemeinsam mit 65 - 99 Gew.-% Ai) in einer radikalischen Polymerisation von
A) 95 - 40 Gew.-% der Monomermischung aus Ai) und Aii) in Gegenwart von
B) 5 - 60 Gew.-% mindestens eines Ethylen-Copolymers einsetzt, und wobei
Ai) mindestens ein Alkyl(meth)acrylat mit einem linearen C₁₆-C₄₀-Alkylrest enthält, und
Aii) mindestens ein aus (Meth)acrylaten und (Meth)acrylamiden ausgewähltes Comonomer ist, das einen über eine Alkylen-, Alkenylen-, Oxyalkylen- oder Polyoxyalkylengruppe an die Estergruppe des (Meth)acrylats bzw. die Amidgruppe des (Meth)acrylamids gebundenen, gegebenenfalls substituierten aromatischen Rest trägt.

Die Formulierung Alkyl(meth)acrylat umfasst hierin Ester der Acrylsäure wie auch der Methacrylsäure. Die Formulierung (Meth)acrylamid umfasst hierin Amide der Acrylsäure wie auch der Methacrylsäure. Die Formulierung (Meth)acrylsäure umfasst hierin Acrylsäure wie auch Methacrylsäure.

Bei den Monomeren Ai handelt es sich um Ester der (Meth)acrylsäure mit linearen Fettalkoholen mit 16 bis 40 C-Atomen im Alkylrest. Bevorzugte Monomere Ai weisen die allgemeine Formel (1)

H₂C = C(R¹) - COOR² (1)

auf, wobei
- R¹: für H oder eine Methylgruppe und bevorzugt für H steht und
- R²: für einen linearen Alkylrest mit 16 bis 40 Kohlenstoffatomen, bevorzugt mit 18 bis 36 Kohlenstoffatomen, besonders bevorzugt mit 18 bis 30 Kohlenstoffatomen und insbesondere mit 18 bis 26 Kohlenstoffatomen, wie beispielsweise mit 16 bis 30 Kohlenstoffatomen, 16 bis 36 Kohlenstoffatomen oder mit 18 bis 40 Kohlenstoffatomen steht.

Bevorzugte Monomere Ai sind Ester der Acrylsäure, wobei R¹ für Wasserstoff steht. Beispiele für bevorzugte Reste R² sind der 1-Hexadecyl-, 1-Octadecyl-, 1-Nonadecyl-, 1-Eicosyl-, 1-Heneicosyl-, 1-Docosyl-, 1-Tetracosyl-, 1-Hexacosyl-, 1-Octacosyl- und der 1-Tricontylrest. Beispiele für bevorzugte Monomere Ai sind Hexadecylacrylat, Octadecylacrylat, Nonadecylacrylat, Eicosylacrylat, Heneicosylacrylat, Docosylacrylat, Tetracosylacrylat und Hexacosylacrylat.

Besonders bevorzugt werden Mischungen verschiedener Alkyl(meth)acrylate Ai eingesetzt. Beispielsweise können Gemische eingesetzt werden, bei denen R² für C₁₆- und C₁₈-Reste oder für C₁₈-, C₂₀- und C₂₂-Reste steht. In einer bevorzugten Ausführungsform handelt es sich bei mindestens einem der eingesetzten Alkyl(meth)acrylate Ai um 1-Docosylacrylat, d. h. R² steht für einen linearen Alkylrest mit 22 Kohlenstoffatomen. In einer besonders bevorzugten Ausführungsform der Erfindung handelt es sich bei mindestens 20 Gew.-% und speziell bei mindestens 25 Gew.-% der eingesetzten Alkyl(meth)acrylate Ai um 1-Docosylacrylat. In einer bevorzugten Ausführungsform werden Gemische umfassend 1-Octadecyl-(meth)acrylat, 1-Eicosyl(meth)acrylat und 1-Docosyl(meth)acrylat eingesetzt. Gemische verschiedener (Meth)acrylate sind beispielsweise durch Veresterung entsprechender Fettalkoholmischungen mit Acrylsäure bzw. Methacrylsäure zugänglich. Teilweise sind sie auch kommerziell erhältlich. Sie können neben den genannten C₁₈/C₂₀/C₂₂-(Meth)acrylaten noch geringe Mengen von (Meth)acrylaten mit höherer oder niedrigerer Kohlenstoffzahl als Nebenprodukte umfassen. Beispielsweise kann es sich um Gemische handeln, welche 30 bis 50 Gew.-% 1-Octadecyl(meth)acrylat, 10 bis 20 Gew.-% 1-Eicosyl(meth)methacrylat sowie 30 bis 60 Gew.-% 1-Docosyl(meth)acrylat umfassen. Besonders bevorzugt sind Gemische der oben genannten Acrylate.

In einer bevorzugten Ausführungsform leiten sich die Comonomere Aii von Estern und Amiden der (Meth)acrylsäure mit Hydroxylgruppen bzw. Aminogruppen tragenden aromatischen Verbindungen ab. Bevorzugte aromatische Verbindungen besitzen 1 oder mehrere aromatische Ringe wie beispielsweise 1, 2, 3 oder 4 aromatische Ringe mit jeweils 4n+2 π-Elektronen (aromatisches System). Das aromatische System kann neben Kohlenstoffatomen auch ein oder mehrere Heteroatome wie beispielsweise 1, 2 oder 3 Heteroatome enthalten. Bevorzugte Heteroatome sind dabei Stickstoff und Sauerstoff und insbesondere Stickstoff. Enthält die aromatische Verbindung mehrere aromatische Ringe, so sind diese in einer bevorzugten Ausführungsform anelliert. In einer weiteren bevorzugten Ausführungsform sind die aromatischen Ringe über eine C-C-Bindung oder über einen Alkylenrest mit 1 bis 4 C-Atomen und besonders bevorzugt mit 1 oder 2 C-Atomen miteinander verbunden. Bevorzugte aromatische Systeme haben 6 bis 30 C-Atome oder 5 bis 29 C-Atome und ein Stickstoffatom oder 3 bis 28 C-Atome und 2 Stickstoffatome. Beispiele für bevorzugte Arylreste sind Phenyl-, Pyridyl-, Naphthyl-, Anthryl-, Phenantryl-, Biphenyl-, Cumylphenyl-, Distyrylphenyl und Tristyrylphenolreste. Besonders bevorzugtes aromatisches System ist der Phenylrest.

Bevorzugt trägt das aromatische System nur eine Hydroxyl- bzw. Aminogruppe. Weiterhin bevorzugt sind Hydroxylgruppen wie auch Aminogruppen über ein Bindeglied, das ein oder mehrere C-Atomen enthält, an das aromatische System gebunden.

Besonders bevorzugte Comonomere Aii weisen die allgemeine Formel (2) 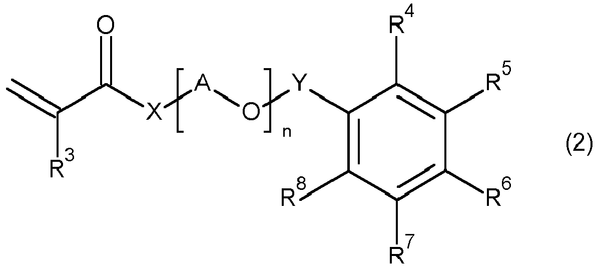 auf, worin
- R³: für Wasserstoff oder Methyl,
- R⁴, R⁵, R⁶, R⁷ und R⁸: unabhängig voneinander für Wasserstoff, einen C₁-C₂₀-Alkylrest, einen C₁-C₄-Alkylarylrest, einen Oxy-C₁-C₆-alkylrest oder eine Cyano-, Nitro-, Halogen- oder Sulfonatgruppe,
- X: für Sauerstoff oder NR⁹,
- A: für einen Alkylenrest mit 2 bis 6 C-Atomen,
- n: für 0 oder eine ganze Zahl von 1 bis 10, mit der Maßgabe, dass wenn n = 1 ist, Y keine Einfachbindung zwischen dem aromatischen System und dem Sauerstoff der Oxalkylengruppe bedeutet,
- Y: für eine Alkylengruppe mit 1 bis 10 C-Atomen, eine Alkenylengruppe mit 3 bis 10 C-Atomen, eine Carbonylgruppe, eine Gruppe der Formel -C(=O)-R¹⁰-, eine Einfachbindung zwischen dem aromatischen System und dem Sauerstoff der Oxalkylengruppe bzw. der Polyoxyalkylengruppe oder, wenn n für 0 steht, für eine Einfachbindung zwischen dem aromatischen System und X steht,
- R⁹: für Wasserstoff oder einen C₁-C₂₀-Alkylrest und
- R¹⁰: für eine Einfachbindung, eine Alkylengruppe mit 1 bis 6 C-Atomen oder eine Alkenylengruppe mit 3 bis 6 C-Atomen steht.

In einer ersten speziell bevorzugten Ausführungsform sind die (Meth)acrylestergruppe CH₂=C(R³)-C(=O)-O- und das aromatische System des Comonomers Aii über eine Alkylengruppe mit 1 bis 10 C-Atomen oder eine Alkenylengruppe mit 3 bis 10 C-Atomen verbunden. Bevorzugte Bindeglieder Y sind Alkylenreste mit 1 bis 4 C-Atomen wie beispielsweise Methylen-, Ethylen- oder Propylengruppen sowie Alkenylengruppen mit 3 bis 4 C-Atomen wie beispielsweise eine Propenylengruppe. In dieser Ausführungsform weisen die Comonomere Aii bevorzugt die Strukturformel 2a 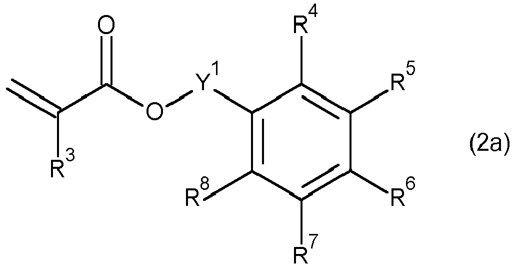 auf, worin
- R³: für Wasserstoff oder Methyl,
- R⁴, R⁵, R⁶, R⁷ und R⁸: unabhängig voneinander für Wasserstoff, einen C₁-C₂₀-Alkylrest, einen C₁-C₄-Alkylarylrest, einen Oxy-C₁-C₆-alkylrest oder eine Cyano-, Nitro-, Halogen- oder Sulfonatgruppe,
- Y¹: für eine Alkylengruppe mit 1 bis 10 C-Atomen oder eine Alkenylengruppe mit 3 bis 10 C-Atomen steht.

In einer zweiten speziell bevorzugten Ausführungsform sind die (Meth)acrylestergruppe CH₂=C(R³)-C(=O)-O- und das aromatische System des Comonomers Aii über eine Poly(oxyalkylen)gruppe verbunden. In dieser Ausführungsform weisen die Comonomere Aii bevorzugt die Strukturformel 2b 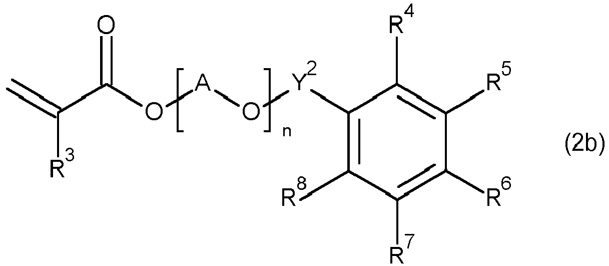 auf, worin
- R³: für Wasserstoff oder Methyl,
- R⁴, R⁵, R⁶, R⁷ und R⁸: unabhängig voneinander für Wasserstoff, einen C₁-C₂₀-Alkylrest, einen C₁-C₄-Alkylarylrest, einen Oxy-C₁-C₆-alkylrest oder eine Cyano-, Nitro-, Halogen- oder Sulfonatgruppe,
- A: für einen Alkylenrest mit 2 bis 6 C-Atomen,
- n: für eine ganze Zahl von 2 bis 10 und
- Y²: für eine Einfachbindung zwischen dem aromatischen System und dem Sauerstoff der Polyoxyalkylengruppe, eine Alkylengruppe mit 1 bis 10 C-Atomen oder eine Alkenylengruppe mit 3 bis 10 C-Atomen steht.

Bevorzugte Poly(oxyalkylen)gruppen sind beispielsweise durch Oxalkylierung einer direkt an das aromatische System gebundenen Hydroxylgruppe, wobei Y² für eine Einfachbindung steht, oder auch einer über eine C₁- bis C₁₀-Alkylengrupe oder eine C₃- bis C₁₀-Alkenylengruppe und bevorzugt einer über eine C₁- bis C₄-Alkylengruppe an das aromatische System gebundenen Hydroxylgruppe zugänglich. Der Alkoxylierungsgrad n beträgt bevorzugt 1 bis 10 Mol Alkylenoxid pro Hydroxylgruppe und besonders bevorzugt 1 bis 4 Mol Alkylenoxid pro Hydroxylgruppe. Bevorzugte Alkylenoxide sind Ethylenoxid, Propylenoxid, Butylenoxid und deren Mischungen.

In einer weiteren speziell bevorzugten Ausführungsform ist das Bindeglied zwischen aromatischem System und der Oxyalkylen- bzw. der Polyoxyalkylengruppe -[A-O]ₙ- eine Carbonylgruppe. In dieser Ausführungsform sind aromatisches System und (Poly)oxyalkyengruppe folglich über eine weitere Estergruppe verbunden. In dieser Ausführungsform weisen die Comonomere Aii bevorzugt die Strukturformel 2c 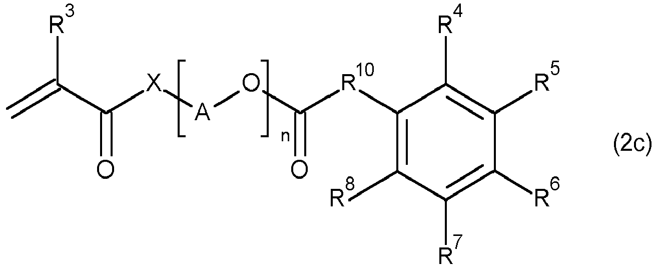 auf, worin
- R³, R⁴, R⁵, R⁶, R⁷, R⁸, X, A und R¹⁰: die oben gegebenen Bedeutungen haben und
- n: für eine ganze Zahl von 1 bis 10 steht.

Diese Ausführungsform umfasst beispielsweise Ester von Oxalkylaten aromatischer Carbonsäuren mit (Meth)acrylsäure. In bevorzugten aromatischen Carbonsäuren kann die Carboxylgruppe direkt an das aromatische System oder über ein Bindeglied R¹⁰ wie beispielsweise eine Alkylengruppe mit 1 bis 6 C-Atomen oder eine Alkenylengruppe 3 bis 6 C-Atomen an das aromatische System gebunden sein. Beispiele für bevorzugte aromatische Carbonsäuren sind Benzoesäure, Nicotinsäure, Phenylessigsäure und Zimtsäure.

In einer bevorzugten Ausführungsform trägt das aromatische System ein bis vier weitere Substituenten, besonders bevorzugt 1 bis 2 und insbesondere einen weiteren Substituenten. Bevorzugte Substituenten sind Alkylreste, C₁-C₄-Alkylarylreste, Oxyalkylreste, Cyano-, Nitro-, Halogen- und Sulfonatgruppen. Bevorzugte Alkylreste haben 1 bis 20 C-Atome, besonders bevorzugt 1 bis 10 C-Atome und insbesondere 1 bis 4 C-Atome. Die Alkylreste können linear oder, sofern die Alkylgruppe drei oder mehr C-Atome aufweist, verzweigt sein. Beispiele für bevorzugte Alkylgruppen sind Methyl-, Ethyl-, Propyl-, Isopropyl-, n-Butyl-, iso-Butyl-, tert.-Butyl-, Octyl-, Nonyl-, Decyl-, Dodecyl-, Tridecylreste sowie von höheren Homologen des Propens sowie des Butens abgeleitete Alkylreste und deren Mischungen. Bevorzugte Oxyalkylreste besitzen einen über ein Sauerstoffatom an das aromatische System gebundenen C₁-C₆-Alkylrest wie beispielsweise einen Methoxy oder Ethoxyrest. Beispiele für bevorzugte, einen weiteren Substituenten tragende aromatische Systeme sind tert.-Butylphenol, di-tert.-Buytlphenol, Nonylphenol, Cardanol, Methoxyphenol und Ethoxyphenol. Bevorzugte Alkylarylreste besitzen einen über einen C₁-C₄-Alkylenrest an das aromatische System gebundenen weiteren Arylrest. Beispiel für einen bevorzugten Alkylarylrest ist der Styrylrest.

Beispiele für bevorzugte Comonomere, die einen über eine Alkylen-, Alkenylen-, Oxyalkylen- oder Polyoxyalkylengruppe an eine (Meth)acrylestergruppe bzw. an ein (Meth)acrylamid gebundenes, gegebenenfalls substituiertes aromatisches System tragen sind Benzylacrylat, 2-Phenylethylacrylat, Cinnamylacrylat, Benzylacrylamid, Benzylmethacrylat, 2-Phenylethylmethacrylat, Cinnamylmethacrylat, Benzylmethacrylamid, Ester der (Meth)acrylsäure mit Alkoxilaten des Phenols wie auch von C₁-C₂₀-Alkylphenolen mit 1 bis 20 mol und bevorzugt 2 bis 10 wie beispielsweise 1 bis 10 oder 2 bis 20 mol Ethylenoxid, Propylenoxid und/oder Butylenoxid, sowie Ester von Hydroxyethyl(meth)acrylat mit Benzoesäure, Methylbenzoesäure (Toluylsäure) bzw. Phenylessigsäure oder von Hydroxypropyl(meth)acrylat mit Benzoesäure, Methylbenzoesäure bzw. Phenylessigsäure.

In einer weiteren bevorzugten Ausführungsform stehen R⁴, R⁵, R⁶, R⁷, R⁸, gleichzeitig für H.

Bevorzugte Comonomere Aii sind nach bekannten Verfahren herstellbar und in den meisten Fällen auch kommerziell verfügbar. Beispielsweise können (Meth)acrylatgruppen enthaltende Comonomere Aii durch Veresterung von Meth)acrylsäure mit einer eine Hydroxylgruppe tragenden aromatischen Verbindung der Formel (3), 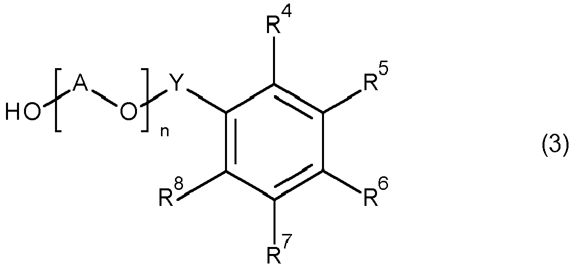 worin A, Y, R⁴, R⁵, R⁶, R⁷, R⁸ und n die oben gegebenen Bedeutungen haben, hergestellt werden. Besonders bevorzugte Alkohole sind dabei Benzylalkohol, 2-Phenylethanol, Zimtalkohol, Phenol und und C₁-C₂₀-Alkylphenole. Bevorzugte (Meth)acylamide sind beispielsweise durch Kondensation von (Meth)acrylsäure mit entsprechenden Aryl- oder Arylalkylaminen wie beispielsweise Benzylamin, 2-Phenylethylamin und 1-Phenylethylamin zugänglich.

Die Monomermischung A) enthält 65 bis 99 Gew.-%, bevorzugt 70 bis 95 Gew.-%, und insbesondere 75 bis 90 Gew.-% wie beispielsweise 65 bis 95 Gew.-%, 65 bis 90 Gew.-%, 70 bis 99 Gew.-%, 70 bis 90 Gew.-%, 75 bis 99 Gew.-% oder 75 bis 95 Gew.-% mindestens eines Alkyl(meth)acrylats Ai. Weiterhin enthält sie 1 bis 35 Gew.-%, besonders bevorzugt 2 bis 30 Gew.-% und insbesondere 5 bis 25 Gew.-% wie beispielsweise 1 bis 40 Gew.-%, 1 bis 25 Gew.-%, 2 bis 35 Gew.-%, 2 bis 25 Gew.-%, 5 bis 35 Gew.-% oder 5 bis 30 Gew.-% mindestens eines Alkyl(meth)acrylats Aii, jeweils bezogen auf die Gesamtmasse an Monomermischung A). In einer speziellen Ausführungsform ergänzen sich die Mengen an Alkyl(meth)acrylat Ai und Alkyl(meth)acrylat Aii zu 100 %.

Neben den Monomeren Ai und Aii können im Polymer A) optional noch weitere Struktureinheiten enthalten sein, die sich von einem oder mehreren weiteren monoethylenisch ungesättigten Monomeren Aiii ableiten. Die Monomere Aiii sind von den Monomeren Ai und Aii verschieden. Mithilfe der weiteren Monome Aiii können die Eigenschaften der erfindungsgenmäßen Polymere sowie die Eigenschaften der diese Polymere enthaltenden Formulierungen weiter modifiziert und den gewünschten Eigenschaften angepasst werden.

Bevorzugt liegt der Anteil der weiteren monoethylenisch ungesättigten Verbindungen Aiii unter 20 Gew.-%, besonders bevorzugt unter 10 Gew.-% und speziell unter 5 Gew.-%, jeweils bezogen auf die Gesamtmasse an Monomeren A). In einer besonders bevorzugten Ausführungsform enthält das erfindungsgemäße Polymer keine weiteren Monomere Aiii.

Geeignete weitere ethylenisch ungesättigte Verbindungen Aiii sind beispielsweise ethylenisch ungesättigte Ester der allgemeinen Formel (4)

H₂C = C(R¹) - COOR¹¹ (4)

wobei
- R¹: Wasserstoff oder Methyl und
- R¹¹: für einen linearen Alkylrest mit 1 bis 11, bevorzugt mit 2 bis 10 und insbesondere mit 2 bis 6 C-Atomen, für einen verzweigten Alkylrest mit 4 bis 17, bevorzugt mit 4 bis 16, besonders bevorzugt mit 4 bis 15 Kohlenstoffatomen oder für einen zyklischen Alkylrest mit 5 bis 20, bevorzugt mit 6 bis 12 und besonders bevorzugt mit 6 bis 10 Kohlenstoffatomen steht.

Beispiele für lineare Alkylreste R¹¹ umfassen Methyl, Ethyl-, n-Propyl, n-Butyl, n-Pentyl, n-Hexyl, n-Heptyl-, n-Octyl-, n-Nonyl-, n-Decyl-, n-Undecyl-, und n-Dodecylreste, bevorzugt sind n-Propyl, n-Butyl, n-Pentyl, n-Hexyl, n-Heptyl-, n-Octyl-, n-Nonyl- und n-Decylreste, besonders bevorzugt sind Ethyl-, n-Propyl, n-Butyl, n-Pentyl und n-Hexylreste und ganz besonders bevorzugt sind n-Butylreste. Beispiele für geeignete Alkyl(meth)acrylate mit linearem Alkylrest sind Ethyl(meth)acrylat, Propyl(meth)acrylat, Butyl(meth)acrylat, Pentyl(meth)acrylat und Hexyl(meth)acrylat.

Verzweigte Alkylreste R¹¹ können einfach oder mehrfach verzweigt sein. Beispiele für verzweigte Alkylreste R¹¹ umfassen i-Butyl-, t-Butyl-, 2,2'-Dimethylpropyl-, 2-Ethylhexyl-, 2-Propylheptyl-, i-Nonyl-, i-Decyl-, i-Tridecyl-, i-Heptadecylreste sowie die von Oligomeren des Propens, n-Butens und Isobutens abgeleiteten Alkylreste wie Tripropenyl-, Tetrapropenyl-, Pentapropenyl-, Tributenyl- und Tetrabutenylreste. Bevorzugt sind t-Butyl-, 2-Ethylhexyl-, 2-Propylheptylreste sowie Tetrapropenyl- und Tributenylreste. Beispiele für geeignete Alkyl(meth)acrylate mit verzweigtem Alkylrest sind t-Butyl(meth)acrylat, 2-Ethylhexyl(meth)acrylat, 2-Propylheptyl(meth)acrylat sowie Tetrapropenyl(meth)acrylat und Tributenyl(meth)acrylat.

Weitere als weiteres Comonomer Aiii bevorzugte Alkyl(meth)acrylate weisen die allgemeine Formel (5) 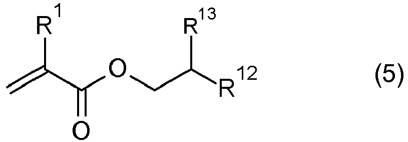 auf, wobei
- R¹: Wasserstoff oder Methyl und
- R¹² und R¹³: unabhängig voneinander für einen gesättigten, linearen Alkylrest mit 6 bis 20 C-Atomen stehen und die Summe der Kohlenstoffatome in R¹² und R¹³ zwischen 16 und 40 liegt.

Bevorzugt leiten sich die Alkyl(meth)acrylate der Formel (5) von C₈- bis C₂₂-Alkoholen ab, die in 2-Stellung zur Hydroxylgruppe einen Alkylrest mit 6 bis 20 C-Atomen tragen. Bevorzugte Alkohole zur Herstellung der Ester der Formel (5) besitzen insgesamt 18 bis 36 und speziell 18 bis 32 C-Atome, das heißt die Summe der Kohlenstoffatome in den Resten R¹² und R¹³ beträgt bevorzugt 16 bis 34 und speziell 16 bis 30. Bevorzugt tragen die Alkylreste R¹² und R¹³ der Alkyl(meth)acrylate der Formel (5) eine unterschiedliche Anzahl an C-Atomen. In einer besonders bevorzugten Ausführungsform besitzt einer der Reste R¹² und R¹³ vier C-Atome mehr als der andere. Diese 2-Alkyl-1-alkanole werden auch als Guerbet-Alkohole bezeichnet. Besonders bevorzugt sind die oben genannten Alkylacrylate Aiii.

Zyklische Alkylreste R¹¹ können monozyklisch oder polyzyklisch sein, bevorzugt sind sie mono- oder bizyklisch. Sie können weiterhin mit linearen und/oder verzweigten Alkylresten substituiert sein. Beispiele zyklischer Alkylreste R¹¹ umfassen Cyclopentyl-, Cyclohexyl-, 4-Methylcyclohexyl-, Cycloheptyl-, Bicyclo[2.2.1]heptyl-, Bicyclo[2.2.2]octyl- oder 2-(1,7,7-Trimethylbicyclo[2.2.1]heptylreste. Beispiele für geeignete Alkyl(meth)acrylate mit zyklischem Alkylrest sind Cyclohexyl(meth)acrylat und Bicyclo[2.2.1]heptyl(meth)acrylat.

Weitere Beispiele für ethylenisch ungesättigte Verbindungen Aiii sind Vinylester von Carbonsäuren mit 1 bis 20 C-Atomen, α-Olefine mit 6 bis 40 C-Atomen, Vinylaromaten, ethylenisch ungesättigte Dicarbonsäuren sowie deren Anhydride und Ester mit C₁₀-C₃₀-Fettalkoholen, Acrylsäure, Methacrylsäure und insbesondere weitere funktionelle Gruppen tragende ethylenisch ungesättigte Verbindungen wie beispielsweise Hydroxyethylacrylat, Hydroxypropylacrylat, Hydroxybutylacrylat, Dimethylaminoethylacrylat, Perfluoralkylacrylat, Methoxyessigsäurevinylester, die Isomere des Vinylpyridins und seiner Derivate, N-Vinylpyrrolidon sowie (Meth)acrylamid und seine Derivate wie N-Alkyl(meth)acrylamide mit C₁-C₂₀-Alkylresten.

Auch Mischungen mehrerer verschiedener ethylenisch ungesättigter Verbindungen Aiii können erfindungsgemäß eingesetzt werden. Sofern Mischungen verschiedener Monomere Aiii eingesetzt werden, liegt deren Gesamtmenge im für Aiii beschriebenen Bereich.

Sofern ein weiteres Monomer Aiii in der Monomermischung A) enthalten ist, enthält die Monomermischung A) bevorzugt 65 bis 98, insbesondere 70 bis 95 und speziell 75 bis 90 Gew.-% wie beispielsweise 65 bis 95 Gew.-%, 65 bis 90 Gew.-%, 70 bis 98 Gew.-%, 70 bis 90 Gew.-%, 75 bis 98 Gew.-% oder 75 bis 95 Gew.-% mindestens eines Alkyl(meth)acrylats Ai bezogen auf die Gesamtmasse an Monomermischung A).

Bei Anwesenheit eines weiteren Monomers Aiii enthalten die Alkyl(meth)acrylate A) weiterhin bevorzugt 1 bis 34, insbesondere 2 bis 28 und speziell 5 bis 20 Gew.-% wie beispielsweise 1 bis 28 Gew.-%, 5 bis 20 Gew.-%, 2 bis 34 Gew.-%, 2 bis 20 Gew.-%, 5 bis 34 Gew.-% oder 5 bis 28 Gew.-% mindestens eines einen aromatischen Rest tragenden (Meth)acrylsäurederivats Aii bezogen auf die Gesamtmasse an Monomermischung A).

Im Falle seiner Anwesenheit ist das weitere Monomer Aiii bevorzugt zu 1 bis 20 Gew.-%, besonders bevorzugt zu 2 bis 15 Gew.-% und speziell zu 5 bis 10 Gew.-% wie beispielsweise zu 1 bis 15 Gew.-%, 1 bis 10 Gew.-%, 2 bis 20 Gew.-%, 2 bis 10 Gew.-%, 5 bis 20 Gew.-% oder 5 bis 15 Gew.-%, bezogen auf die Gesamtmasse an Monomermischung A) in der Monomermischung A) enthalten.

Bevorzugte Copolymere des Ethylens (B) sind Copolymere des Ethylens mit ethylenisch ungesättigten Estern, Ethern und/oder Alkenen. Besonders geeignet sind solche Copolymere, die neben Ethylen 4 bis 18 mol-%, insbesondere 7 bis 15 mol-% und speziell 8 bis 14 mol-% wie beispielsweise 4 bis 17 mol-%, 4 bis 14 mol-%, 7 bis 18 mol-%, 7 bis 14 mol-%, 8 bis 18 mol-% oder 8 bis 15 mol-% mindestens eines Vinylesters, Acrylsäureesters, Methacrylsäureesters, Alkylvinylethers und/oder Alkens enthalten. Bevorzugte Comonomere sind Vinylester, Acrylsäureester und/oder Methacrylsäureester. Sollte das Ethylen-Copolymer zwei (Terpolymer) oder mehr, wie beispielsweise drei (Tetrapolymer) oder vier (Pentapolymer), verschiedene Comonomere enthalten, so beziehen sich die oben spezifizierten molaren Comonomergehalte auf die Summe aller Comonomergehalte.

Bei den für die Copolymerisation mit Ethylen bevorzugten Vinylestern handelt es sich um solche der Formel (6)

CH₂ = CH - OCOR¹⁴ (6)

worin
- R¹⁴: C₁- bis C₃₀-Alkyl, vorzugsweise C₄- bis C₁₆-Alkyl, speziell C₆- bis C₁₂-Alkyl bedeutet.

Die Alkylreste können linear oder verzweigt sein. In einer bevorzugten Ausführungsform handelt es sich um lineare Alkylreste mit 1 bis 18 C-Atomen wie beispielsweise C₁- bis C₁₆-Alkyl oder C₁- bis C₁₂-Alkylreste. In einer weiteren bevorzugten Ausführungsform steht R¹⁴ für einen verzweigten Alkylrest mit 3 bis 30 C-Atomen und bevorzugt mit 5 bis 16 C-Atomen wie beispielsweise mit 5 bis 30 oder 3 bis 16 C-Atomen. Besonders bevorzugte Vinylester leiten sich von sekundären und insbesondere tertiären Carbonsäuren ab, deren Verzweigung sich in alpha-Position zur Carbonylgruppe befindet. Speziell bevorzugt sind dabei die auch als Versaticsäurevinylester bezeichneten Vinylester tertiärer Carbonsäuren, die Neoalkylreste mit 5 bis 11 Kohlenstoffatomen, insbesondere mit 8, 9 oder 10 Kohlenstoffatomen besitzen. In einer weiteren Ausführungsform können die genannten Alkylgruppen mit einer oder mehreren Hydroxylgruppen substituiert sein

Beispiele für bevorzugte Vinylester umfassen Vinylacetat, Vinylpropionat, Vinylbutyrat, Vinylisobutyrat, Vinylhexanoat, Vinylheptanoat, Vinyloctanoat, Pivalinsäurevinylester, 2-Ethylhexansäurevinylester, Vinyllaurat, Vinylstearat sowie Versaticsäureester wie Neononansäurevinylester, Neodecansäurevinylester, Neoundecansäurevinylester. Insbesondere bevorzugt als Vinylester ist Vinylacetat.

In einer weiteren bevorzugten Ausführungsform enthalten die Ethylen-Copolymere B) Vinylacetat und mindestens einen weiteren Vinylester der Formel 6 worin R¹⁴ für C₄- bis C₃₀-Alkyl, vorzugsweise C₄- bis C₁₆-Alkyl, speziell C₆- bis C₁₂-Alkyl wie beispielsweise C₄- bis C₁₂-Alkyl steht. Als weitere Vinylester sind dabei die oben beschriebenen Vinylester dieses Kettenlängenbereichs wie beispielsweise Vinylbutyrat, Vinylisobutyrat, Vinylhexanoat, Vinylheptanoat, Vinyloctanoat, Pivalinsäurevinylester, 2-Ethylhexansäurevinylester, Vinyllaurat, Vinylstearat sowie Versaticsäureester wie Neononansäurevinylester, Neodecansäurevinylester, Neoundecansäurevinylester bevorzugt.

Bei den für die Copolymerisation mit Ethylen bevorzugten Acrylsäure- und Methacrylsäureestern handelt es sich um solche der Formel (7)

CH₂ = CR¹⁵ - COOR¹⁶ (7)

worin
- R¹⁵: Wasserstoff oder Methyl und
- R¹⁶: C₁- bis C₃₀-Alkyl, vorzugsweise C₄- bis C₁₆-Alkyl, speziell C₆- bis C₁₂-Alkyl bedeutet.

Die Alkylreste R¹⁶ können linear oder verzweigt sein. In einer bevorzugten Ausführungsform sind sie linear. In einer weiteren bevorzugten Ausführungsform besitzen sie eine Verzweigung an dem zur Estergruppierung benachbarten Kohlenstoffatom. Geeignete Acrylester umfassen z. B. Methyl(meth)acrylat, Ethyl(meth)acrylat, Propyl(meth)acrylat, n- und iso-Butyl(meth)acrylat, Hexyl-, Octyl-, 2-Ethylhexyl-, Decyl-, Dodecyl-, Tetradecyl-, Hexadecyl-, Octadecyl(meth)acrylat sowie Mischungen dieser Comonomere.

Bei den für die Copolymerisation mit Ethylen bevorzugten Alkylvinylethern handelt es sich um Verbindungen der Formel (8)

CH₂ = CH - OR¹⁷ (8)

worin
- R¹⁷: C₁- bis C₃₀-Alkyl, vorzugsweise C₄- bis C₁₆-Alkyl, speziell C₆- bis C₁₂-Alkyl bedeutet.

Die Alkylreste R¹⁷ können linear oder verzweigt sein. Beispielsweise seien genannt Methylvinylether, Ethylvinylether, iso-Butylvinylether.

Bei den für die Copolymerisation mit Ethylen bevorzugten Alkenen handelt es sich um einfach ungesättigte Kohlenwasserstoffe mit 3 bis 30 Kohlenstoffatomen, insbesondere 4 bis 16 Kohlenstoffatomen und speziell 5 bis 12 wie beispielsweise mit 3 bis 16 oder 3 bis 12 Kohlenstoffatomen. Geeignete Alkene umfassen Propen, Buten, Isobuten, Penten, Hexen, 4-Methylpenten-1, Hepten, Octen, Decen, Diisobutylen sowie Norbornen und seine Derivate wie Methylnorbornen und Vinylnorbornen. Besonders bevorzugt sind Propen, 4-Methylpenten-1 und Diisobutylen.

Die Alkylreste R¹⁴, R¹⁶ und R¹⁷ können unabhängig voneinander in untergeordneten Mengen funktionelle Gruppen wie beispielsweise Amino-, Amido-, Nitro-, Cyano-, Hydroxy-, Keto-, Carbonyl-, Carboxy-, Ester-, Sulfogruppen und/oder Halogenatome tragen, solange diese den Kohlenwasserstoffcharakter der genannten Reste nicht wesentlich beeinträchtigen. Besonders bevorzugt tragen die Alkylreste R¹⁴, R¹⁶ und R¹⁷ unabhängig voneinander höchstens eine der genannten funktionellen Gruppen.

Besonders bevorzugte Terpolymerisate enthalten außer Ethylen 3 bis 15 mol-%, insbesondere 5 bis 13 mol-% wie beispielsweise 3 bis 13 mol-% oder 3 bis 15 mol-% Vinylacetat und 0,1 bis 12 mol-%, insbesondere 0,2 bis 10 mol-% und speziell 0,5 bis 8 mol-% wie beispielsweise 0,1 bis 10 mol-%, 0,1 bis 8 mol-%, 0,2 bis 12 mol-%, 0,2 bis 8 mol-%, 0,5 bis 12 mol-% oder 0,5 bis 10 mol-% mindestens eines langkettigen Vinylesters, (Meth)acrylesters und/oder Alkens (Termonomer), wobei der gesamte Comonomergehalt zwischen 4 und 18 mol-%, bevorzugt zwischen 7 und 15 mol-% wie beispielsweise 4 bis 17 mol-%, 4 bis 14 mol-%, 7 bis 18 mol-%, 7 bis 14 mol-%, 8 bis 18 mol-% oder 8 bis 15 mol-% liegt. Besonders bevorzugte Termonomere sind dabei 2-Ethylhexansäurevinylester, Neononansäurevinylester, Neodecansäurevinylester, 2-Ethylhexylacrylat, 2-Propylheptylacrylat und 4-Methyl-2-propylhexylacrylat.

Weitere besonders bevorzugte Copolymere enthalten neben Ethylen und 3 bis 15 mol-%, insbesondere 5 bis 13 mol-% wie beispielsweise 3 bis 13 mol-% oder 5 bis 15 mol-% Vinylestern 0,1 bis 6 mol-%, bevorzugt 0,2 bis 5 mol-% wie beispielsweise 0,1 bis 5 mol-%, oder 0,2 bis 6 mol-% mindestens eines Olefins mit 3 bis 8 C-Atomen wie Propen, Buten, Isobuten, Hexen, 4-Methylpenten, Octen, Diisobutylen, Norbornen und/oder Styrol.

Beispiele für geeignete Terpolymere enthalten neben Ethylen zwei verschiedene Vinylester, zwei verschiedene Alkyl(meth)acrylate, einen Vinylester und ein Alkyl(meth)acrylat, einen Vinylester und ein Olefin oder ein Alkyl(meth)acrylat und ein Olefin.

Das zahlenmittlere Molekulargewicht der Ethylen-Copolymere B) liegt bevorzugt zwischen 1.000 und 100.000 und speziell zwischen 2.500 und 50.000 wie beispielsweise zwischen 1.000 und 50.000 oder zwischen 2.500 und 100.000 g/mol. Die gemäß DIN 53735 bei 190 °C und einer Auflagekraft von 2,16 kg gemessenen MFI₁₉₀-Werte der Ethylen-Copolymere B) liegen bevorzugt zwischen 0,1 und 1.200 g/10 min und speziell zwischen 1 und 900 g/min wie beispielsweise zwischen 0,1 und 900 g/10 min oder zwischen 1 und 1.200 g/10 min. Die Mittels ¹H-NMR-Spektroskopie bestimmten Verzweigungsgrade liegen bevorzugt zwischen 1 und 9 CH₃/100 CH₂-Gruppen, insbesondere zwischen 2 und 6 CH₃/100 CH₂-Gruppen wie beispielsweise zwischen 1 und 6 CH₃/100 CH₂-Gruppen oder zwischen 2 und 9 CH₃/100 CH₂-Gruppen, die nicht aus den Comonomeren stammen.

In einer bevorzugten Ausführungsform werden Mischungen aus zwei oder mehr der oben genannten Ethylen-Copolymere eingesetzt. Bevorzugt unterscheiden sich die den Mischungen zugrunde liegenden Polymere in mindestens einem Charakteristikum. Beispielsweise können sie unterschiedliche Comonomere enthalten, unterschiedliche Comonomergehalte, Molekulargewichte und/oder Verzweigungsgrade aufweisen. In bevorzugten Mischungen hat jedes einzelne Ethylen-Copolymer einen Massenanteil von mindestens 5 Gew.-% bezogen auf die Gesamtmasse an B).

Die Herstellung der Copolymere B) erfolgt nach bekannten Verfahren (vgl. hierzu z. B. Ullmanns Encyclopädie der Technischen Chemie, 5. Auflage, Vol. A 21, Seiten 305 bis 413). Geeignet sind die Polymerisation in Lösung, in Suspension, in der Gasphase und die Hochdruckmassepolymerisation. Vorzugsweise wendet man die Hochdruckmassepolymerisation an, die bei Drücken von 50 bis 400 MPa, vorzugsweise 100 bis 300 MPa und Temperaturen von 50 bis 350 °C, vorzugsweise 100 bis 300 °C, durchgeführt wird. Die Reaktion der Comonomeren wird durch Radikale bildende Initiatoren (Radikalkettenstarter) eingeleitet. Zu dieser Substanzklasse gehören z. B. Sauerstoff, Hydroperoxide, Peroxide und Azoverbindungen wie beispielsweise Cumolhydroperoxid, t-Butylhydroperoxid, Dilauroylperoxid, Dibenzoylperoxid, Bis (2-ethylhexyl)-peroxidicarbonat, t-Butylpermaleinat, t-Butylperbenzoat, Dicumylperoxid, t-Butylcumylperoxid, Di-(t-butyl)peroxid, 2,2'-Azo-bis(2-methylpropanonitril), 2,2'-Azo-bis(2-methylbutyronitril). Die Initiatoren werden einzeln oder als Gemisch aus zwei oder mehr Substanzen in Mengen von 0,01 bis 20 Gew.-%, vorzugsweise 0,05 bis 10 Gew.-%, bezogen auf das Comonomerengemisch, eingesetzt.

Das gewünschte Molekulargewicht, üblicherweise gemessen über den Schmelzflussindex MFI (190 °C / 2,16 kg) der Copolymere B) wird bei gegebener Zusammensetzung des Comonomerengemisches durch Variation der Reaktionsparameter Druck und Temperatur und gegebenenfalls durch Zusatz von Moderatoren eingestellt. Als Moderatoren haben sich Wasserstoff, gesättigte oder ungesättigte Kohlenwasserstoffe, wie beispielsweise Propan und Propen, Aldehyde, wie beispielsweise Propionaldehyd, n-Butyraldehyd und Isobutyraldehyd, Ketone, wie beispielsweise Aceton, Methylethylketon, Methylisobutylketon und Cyclohexanon oder Alkohole wie beispielsweise Butanol, bewährt. In Abhängigkeit von der angestrebten Viskosität werden die Moderatoren in Mengen von bis zu 20 Gew.-%, vorzugsweise von 0,05 bis 10 Gew.-%, bezogen auf das Comonomerengemisch, angewandt.

Die Hochdruckmassepolymerisation wird in bekannten Hochdruckreaktoren, z. B. Autoklaven oder Rohrreaktoren diskontinuierlich oder kontinuierlich durchgeführt, besonders bewährt haben sich Rohrreaktoren. Lösungsmittel wie aliphatische Kohlenwasserstoffe oder Kohlenwasserstoffgemische, Toluol oder Xylol, können im Reaktionsgemisch enthalten sein, wenngleich sich die lösungsmittelfreie Arbeitsweise besonders bewährt hat. Nach einer bevorzugten Ausführungsform der Polymerisation wird das Gemisch aus den Comonomeren, dem Initiator und, sofern eingesetzt, dem Moderator, einem Rohrreaktor über den Reaktoreingang sowie über einen oder mehrere Seitenäste zugeführt. Hierbei können die Comonomerenströme unterschiedlich zusammengesetzt sein (EP-B-0 271 738).

Die erfindungsgemäßen Polymerzusammensetzungen sind erhältlich durch radikalische Copolymerisation der Monomermischung A) in Gegenwart der Ethylen-Copolymere B). Die Durchführung radikalischer Polymerisationen ist dem Fachmann grundsätzlich bekannt.

Die radikalische Polymerisation zur Herstellung der erfindungsgemäßen Polymerzusammensetzungen kann beispielsweise als Massepolymerisation erfolgen, indem die Monomermischung A) mit dem Ethylen-Copolymer B) unter Rühren und Erwärmen gemischt und durch Zugabe eines Radikalkettenstarters polymerisiert wird. Auf Grund der Viskosität der Ethylen-Copolymere erfolgt die Massepolymerisation bevorzugt bei Temperaturen oberhalb des Schmelzpunkts des Ethylen-Copolymers B) wie beispielsweise oberhalb 60 °C, speziell oberhalb 80 °C. Temperaturen zwischen 60 und 150 °C insbesondere zwischen 70 und 140 und speziell zwischen 80 und 120 °C wie beispielsweise zwischen 60 und 120 °C, zwischen 60 und 140 °C, zwischen 70 und 150 °C, zwischen 70 und 120 °C, zwischen 80 und 150 °C oder zwischen 80 und 140 °C haben sich besonders bewährt.

In einer bevorzugten Ausführungsform der Erfindung erfolgt die Herstellung der erfindungsgemäßen Polymerzusammensetzung mittels radikalischer Polymerisation in Lösung (Lösungspolymerisation). Es sind hierfür prinzipiell alle Lösungsmittel geeignet, in denen die Monomere A), die Ethylen-Copolymere B) sowie die gebildete Polymerzusammensetzung bei der für die Polymerisation vorgesehenen Temperatur, auch in der gewünschten hohen Konzentration ausreichend löslich bzw. zumindest homogen dispergiert vorliegen. Weiterhin sollen sie im Zuge der Polymerisation keine unerwünschten Reaktionen eingehen. Geeignete Lösemittel sollten insbesondere nicht selbst polymerisierbar sein und unter den gewählten Polymerisationsbedingungen eine möglichst geringe moderierende / kettenübertragende Wirkung haben.

Bei der Lösungspolymerisation beträgt die Menge an Lösemittel üblicherweise das 0,1- bis 10-fache, bevorzugt das 0,5- bis 5-fache der Gesamtmenge an A) und B). Besonders bevorzugt liegt der Anteil des Lösemittels an der Gesamtmenge aus A), B) und Lösemittel sowie gegebenenfalls anwesenden weiteren Hilfsstoffen zwischen 35 und 80 Gew.-% und speziell zwischen 40 und 70 Gew.-% wie beispielsweise zwischen 35 und 70 Gew.-% oder zwischen 40 und 80 Gew.-%.

Bevorzugt handelt es sich bei den für die Lösungspolymerisation geeigneten Lösemitteln um Kohlenwasserstoffe, bevorzugt um aliphatische, cycloaliphatische und/oder aromatische Kohlenwasserstoffe und deren Gemische. Beispiele für geeignete Lösemittel sind Toluol, Xylol, höhere Aromaten sowie höhersiedende Aromatengemische und/oder isoaliphatische Lösemittel bzw. Lösemittelgemische. In einer bevorzugten Ausführungsform wird als Lösemittel für die Lösungspolymerisation ein hochsiedender aliphatischer Kohlenwasserstoff oder ein Gemisch derartiger Kohlenwasserstoffe mit einem Siedepunkt von mindestens 175 °C und bevorzugt einem Flammpunkt oberhalb 60 °C eingesetzt. Geeignete Kohlenwasserstoffe mit einem Flammpunkt oberhalb 60 °C umfassen beispielsweise n-Undecan (Flammpunkt 60 °C, Siedepunkt 196 °C) und n-Dodecan (Flammpunkt 71 °C, Siedepunkt 216 °C). Bevorzugt werden technische Gemische von Kohlenwasserstoffen eingesetzt, beispielsweise Gemische paraffinischer Kohlenwasserstoffe, Gemische paraffinischer und naphtenischer Kohlenwasserstoffe oder Gemische von Isoparaffinen. Für den Fachmann ist klar, dass technische Gemische noch untergeordnete Anteile an aromatischen oder ungesättigten Kohlenwasserstoffen enthalten können. Der Gehalt an aromatischen und/oder ungesättigten Kohlenwasserstoffen liegt dabei bevorzugt unter 20 Gew.-%, oftmals unter 10 Gew.-% und teilweise unter 1 Gew.-%. Technische Gemische gesättigter aliphatischer Lösemittel sind kommerziell erhältlich, beispielsweise technische Gemische der Shellsol® D-Reihe, der Isopar®-Reihe oder der Exxsol® D-Reihe. Bei der Lösungspolymerisation wird eine gebrauchsfertige, Lösemittel enthaltende, Polymerzusammensetzung erhalten, welche direkt oder auch nach Verdünnung mit weiterem Lösemittel als Pour Point Depressant verwendet werden kann, ohne dass weitere Aufarbeitungsschritte nach der Polymerisation erforderlich sind.

Für die Lösungspolymerisation wird bevorzugt zunächst eine Lösung der verwendeten Monomere Ai, Aii und optional Aiii sowie des Ethylen-Copolymers (B) im gewählten Lösemittel hergestellt. Das Lösen erfolgt durch intensives Vermischen der Komponenten, beispielsweise durch Rühren. In einer ersten bevorzugten Ausführungsform werden die Monomere Ai, Aii und optional Aiii im Lösemittel gelöst und anschließend das Ethylen-Copolymer (B), gegebenenfalls als Vorverdünnung zugeben. In einer weiteren bevorzugten Ausführungsform wird das Ethylen-Copolymer (B) im Lösemittel gelöst und anschließend werden die Monomere Ai, Aii und optional Aiii zugeben. Das Lösen kann durch eine Erhöhung der Temperatur, beispielsweise auf ca. 50 bis 90 °C und gegebenenfalls auch bis zum Siedepunkt des Lösemittels beschleunigt werden.

In einer besonders bevorzugten Ausführungsform wird eine Lösung der Monomere Ai und Aii in einem auch für die spätere Polymerisation geeigneten, wie oben beschriebenen Lösemittel hergestellt, indem man (Meth)acrylsäure mit der Mischung eines Alkohols der Formel R²-OH und einer eine Hydroxylgruppe tragenden aromatischen Verbindung der Formel (3) in diesem Lösemittel verestert und die erhaltene Lösung nach Mischung mit dem Ethylen-Copolymer B) zur Polymerisation einsetzt. Die Veresterung kann nach dem Fachmann prinzipiell bekannten Methoden durchgeführt werden. Optional können für die Veresterung mit (Meth)acrylsäure weitere Alkohole wie beispielsweise solche der Formel R¹¹-OH zugesetzt werden, die zur Bildung von Monomeren Aiii führen. Alternativ können weitere Monomere Aiii vor oder nach der Veresterung zugeführt werden.

In einer bevorzugten Ausführungsform erfolgen die Herstellung der Monomere Ai und Aii und optional weiterer Monomere Aiii sowie deren anschließende Polymerisation in Gegenwart des Ethylen-Copolymers B) in einem aliphatischen Kohlenwasserstoff oder Kohlenwasserstoffgemisch mit geringer moderierender Wirkung wie beispielsweise einem isoparaffinischen Lösemittel oder Lösemittelgemisch mit einem Siedebeginn oberhalb 150 °C und speziell oberhalb 180 °C und einem Flammpunkt von mindestens 60 °C. Somit werden Transport und Lagerung der Polymerzusammensetzungen vereinfacht.

Die radikalische Polymerisation erfolgt unter Verwendung von thermisch zerfallenden Initiatoren für die radikalische Polymerisation. Auch wenn üblicherweise nur ein Initiator eingesetzt wird hat es sich in verschiedenen Fällen bewährt, ein Gemisch aus zwei oder mehr verschiedenen Initiatoren zum Beispiel mit unterschiedlichen Halbwertszeiten einzusetzen. Bevorzugt werden die eingesetzten Initiatoren so gewählt, dass sie im Polymerisationsmedium löslich sind. Bevorzugte Polymerisationsinitiatoren umfassen öllösliche Peroxide und Azoverbindungen, insbesondere solche mit einer 10 h-Halbwertszeit von weniger als 70 °C und bevorzugt weniger als 50 °C. Derartige Initiatoren sind prinzipiell bekannt und kommerziell erhältlich. Bezogen auf die Monomere A) werden sie bevorzugt in Mengen von 0,1 bis 2,0 Gew.-% wie beispielsweise in Mengen von 0,2 bis 1,5 Gew.-% eingesetzt.

Weiterhin können in prinzipiell bekannter Art und Weise Molekulargewichtsregler zugegeben werden. Beispiele für Regler umfassen Alkohole wie Isopropanol, Allylalkohol oder Buten-2-ol, Thiole wie Ethanthiol oder Dodecanthiol und Aldehyde wie Crotonaldehyd. Die Menge der Molekulargewichtsregler beträgt in der Regel 1 bis 4 Gew.-%, bevorzugt 1,5 bis 3 Gew.-% bezogen auf die Gesamtmenge der Monomere A).

Die radikalische Polymerisation wird in prinzipiell bekannter Art und Weise durch Erwärmen des Reaktionsansatzes ausgelöst. Die Polymerisationstemperatur sollte oberhalb der 10 h-Halbwertszeit des Initiators liegen und beträgt in der Regel mindestens 50 °C. Besonders bewährt hat sich eine Polymerisationstemperatur zwischen 50 und 140 °C, insbesondere zwischen 55 und 100 °C. In der Regel wird die Polymerisation in prinzipiell bekannter Art und Weise unter einem Schutzgas wie beispielsweise Stickstoff vorgenommen. Die Polymerisation in Lösung kann vorgenommen werden, indem man die Lösung der Ausgangsstoffe in einem geeigneten, bevorzugt gerührten Reaktionsgefäß vorlegt. Zur Lösung gibt man falls gewünscht einen oder mehrere Molekulargewichtsregler. Nach dem Erreichen der gewünschten Polymerisationstemperatur gibt man eine Lösung des Initiators zu dem zu polymerisierenden Gemisch. Dabei kann die Gesamtmenge des Initiators zu Beginn der Polymerisation zugesetzt werden, bevorzugt gibt man aber den Initiator über einen Zeitraum von 10 Minuten bis 5 Stunden, bevorzugt 30 Minuten bis 2 Stunden zu. Die Zugabe kann in definierten Portionen oder kontinuierlich erfolgen. Nach der vollständigen Zugabe des Initiators sollte sich im Regelfalle noch eine Nachpolymerisationszeit anschließen. Diese kann beispielsweise 0,5 bis 5 h betragen.

Das Mengenverhältnis von Monomermischung A) zu Ethylen-Copolymeren B) wird je nach den gewünschten Eigenschaften der zu synthetisierenden Polymerzusammensetzung gewählt, wobei der Anteil der Monomermischung A) 40 bis 95 Gew.-%, bevorzugt 50 bis 90 Gew.-%, besonders bevorzugt 60 bis 80 Gew.-% wie beispielsweise 40 bis 90 Gew.-%, 40 bis 80 Gew.-%, 50 bis 95 Gew.-%, 50 bis 80 Gew.-%, 60 bis 95 Gew.-% oder 60 bis 90 Gew.-% und die Menge an Ethylen-Copolymeren B) 5 bis 60 Gew.-%, bevorzugt 10 bis 50 Gew.-% und besonders bevorzugt 20 bis 40 Gew.-% wie beispielsweise 50 bis 50 Gew.-%, 5 bis 40 Gew.-%, 10 bis 60 Gew.-%, 10 bis 40 Gew.-%, 20 bis 60 Gew.-% oder 20 bis 50 Gew.-%, jeweils bezogen auf die Summe aus Monomermischung A) und Ethylen-Copolymeren B) beträgt. In einer speziellen Ausführungsform addieren sich die Mengen an A) und B) zu 100 Gew.-%. Die oben angegebenen Mengen an A und B, die die erfindungsgemäße Zusammensetzung ergeben, verstehen sich in Substanz, also ohne Lösemittel.

Die erfindungsgemäßen Polymerzusammensetzungen sind zur Verbesserung der Kälteeigenschaften von paraffinhaltigen Kohlenwasserstoffölen geeignet. Besonders geeignet sind sie zur Verbesserung der Kälteeigenschaften von Rohölen und daraus hergestellten paraffinhaltigen Produkten wie beispielsweise schweren Heizölen, Bunkerölen und Rückstandsölen. Unter Rohölen werden hier solche Mineralöle verstanden, die an einem Bohrloch anfallen. Dies umfasst auch Gaskondensate und Bitumen. Besonders vorteilhafte Wirkung haben sie auf Roh- und Rückstandsöle. Die erfindungsgemäßen Polymerzusammensetzungen modifizieren die Struktur der bei niedrigen Temperaturen ausfallenden Paraffine, wodurch der Pour Point der paraffinhaltigen Kohlenwasserstofföle abgesenkt wird.

Die Verwendung der erfindungsgemäßen Polymerzusammensetzung als Kälteadditiv erfolgt, indem man dem paraffinhaltigen Kohlenwasserstofföl mindestens eine erfindungsgemäße Polymerzusammensetzung zusetzt. Übliche Zusatzmengen betragen 10 bis 10.000 Gew.-ppm, bevorzugt 50 bis 2.000 Gew.-ppm wie beispielsweise 10 bis 2.000 Gew.-ppm oder 50 bis 10.000 Gew.-ppm der Polymerzusammensetzung.

Die erfindungsgemäße Polymerzusammensetzung kann als solche verwendet werden. In einer bevorzugten Ausführungsform der Erfindung wird die erfindungsgemäße Polymerzusammensetzung als Konzentrat in einem organischen Lösemittel eingesetzt. In dieser Ausführungsform umfasst die Polymerzusammensetzung ein organisches Löse- bzw. Dispergiermittel. Neben dem bei der Lösungspolymerisation direkt anfallenden Konzentrat kann die Polymerzusammensetzung auch nach ihrer Herstellung mit weiterem Lösemittel abgeschwächt werden. Dabei soll die Polymerzusammensetzung homogen dispergiert, bevorzugt gelöst vorliegen. Es sind prinzipiell alle Lösemittel geeignet, die diese Anforderungen erfüllen. Auch Gemische verschiedener Lösemittel können eingesetzt werden.

Bevorzugte organische Lösemittel als Bestandteil von Konzentraten der erfindungsgemäßen Polymerzusammensetzungen sind neben den für die Lösungspolymerisation einsetzbaren, oben beschriebenen Lösemitteln insbesondere aliphatische, cycloaliphatische und/oder aromatische Kohlenwasserstoffe und Kohlenwasserstoffgemische. Besonders bevorzugt sind Lösemittel mit einem Flammpunkt oberhalb 60 °C, da bei Verwendung derartiger Lösemittel für Transport und Lagerung der Konzentrate weniger Beschränkungen zu beachten sind. Bevorzugte Lösemittel haben weiterhin einen Siedepunkt von mindestens 175 °C.

In einer bevorzugten Ausführungsform enthalten Konzentrate der erfindungsgemäßen Polymerzusammensetzungen als Lösemittel einen gesättigten aliphatischen Kohlenwasserstoff. Dabei kann es sich sowohl um einen paraffinischen als auch um einen naphthenischen, also einen gesättigten, zyklischen Kohlenwasserstoff handeln. Besonders bevorzugt wird ein technisches Gemisch von Kohlenwasserstoffen eingesetzt, beispielsweise ein Gemisch paraffinischer Kohlenwasserstoffe, ein Gemisch paraffinischer und naphtenischer Kohlenwasserstoffe oder ein Gemisch von Isoparaffinen. Für den Fachmann ist klar, dass technische Gemische noch untergeordnete Anteile an weiteren Komponenten wie beispielsweise aromatischen oder ungesättigten Kohlenwasserstoffen enthalten können. Technische Gemische gesättigter aliphatischer Kohlenwasserstoffe sind kommerziell erhältlich, beispielsweise als Shellsol® D-Typen, Isopar®-Typen oder Exxsol® D-Typen. Auch Kerosin ist als aliphatisches Kohlenwasserstoffgemisch geeignet. Besonders bevorzugt sind aliphatische Kohlenwasserstoffgemische mit einem Flammpunkt oberhalb 60 °C.

In einer weiteren bevorzugten Ausführungsform enthalten Konzentrate der erfindungsgemäßen Polymerzusammensetzungen als Lösemittel einen aromatischen Kohlenwasserstoff. Beispiele für bevorzugte aromatische Kohlenwasserstoffe sind Toluol, Xylol, höher alkylierte ein- und zweikernige Aromaten und deren Mischungen. Technische Gemische aromatischer Lösemittel sind besonders bevorzugt; sie sind kommerziell beispielsweise als Typen der Shellsol® A-Reihe oder der Solvesso®-Reihe erhältlich. Besonders bevorzugt werden technische Gemische aromatischer Kohlenwasserstoffe mit einem Flammpunkt oberhalb 60 °C eingesetzt.

Weitere Beispiele für geeignete organische Lösemittel sind gesättigte aliphatische Alkohole und Ester aus aliphatischen Carbonsäuren und aliphatischen Alkoholen. Beispiele für geeignete Alkohole umfassen aliphatische Alkohole mit mindestens acht Kohlenstoffatomen wie 1-Octanol, 2-Ethylhexanol, 1-Decanol, 1-Dodecanol und Isotridecanol. Beispiele für geeignete Ester umfassen Ester gesättigter Fettsäuren mit mindestens acht Kohlenstoffatomen mit gesättigten aliphatischen Alkoholen mit 1 bis 4 C-Atomen, wie beispielsweise Laurinsäuremethylester oder Stearinsäuremethylester. Technische Gemische verschiedener aliphatischer Ester sind kommerziell erhältlich. In einer weiteren Ausführungsform der Erfindung können Ester aliphatischer oder cycloaliphatischer Dicarbonsäuren eingesetzt werden, wie beispielsweise Dialkylester von Cyclohexan-1,2-dicarbonsäure wie Cyclohexan-1,2-dicarbonsäure-diisononylester. Besonders bevorzugte Lösemittel weisen einen Flammpunkt oberhalb 60 °C auf.

Die Konzentration der Polymerzusammensetzung im Konzentrat wird vom Fachmann entsprechend den gewünschten Eigenschaften der herzustellenden Formulierung gewählt. Bevorzugte Konzentrate besitzen einen Gehalt an erfindungsgemäßer Polymerzusammensetzung von 10 bis 60 Gew.-%, besonders bevorzugt 20 bis 50 Gew.-% und speziell 25 bis 40 Gew.-% wie beispielsweise 10 bis 50 Gew.-%, 10 bis 40 Gew.-%, 20 bis 60 Gew.-%, 20 bis 40 Gew.-%, 25 bis 60 Gew.-% oder 25 bis 50 Gew.-%, jeweils bezogen auf die Gesamtmasse des Konzentrats. Derartige Formulierungen zeichnen sich durch einen sehr niedrigen Eigenstockpunkt und damit eine vereinfachte Handhabung bei niedrigen Lager- und Transporttemperaturen aus.

In einer bevorzugten Ausführungsform wird das Konzentrat der erfindungsgemäßen Polymerzusammensetzung mittels des oben beschriebenen Verfahrens der Lösungspolymerisation bei einem für die spätere Verwendung vorgesehenen Lösemittelanteil hergestellt. In einer weiteren bevorzugten Ausführungsform wird die Polymerisation lösemittelfrei oder die Lösungspolymerisation bei einer gegenüber dem angestrebten Konzentrat erhöhten Konzentration an Monomermischung A) und Ethylen-Copolymer B) durchgeführt und die so hergestellte Polymerzusammensetzung anschließend durch Zugabe von (weiterem) organischem Lösemittel in das Konzentrat überführt.

Der Einbau von Struktureinheiten Aii, die sich von (Meth)acrylaten und/oder (Meth)acrylamiden ableiten, die einen über eine Alkylen-, Alkenylen-, Oxyalkylen- oder Polyoxyalkylengruppe an die Estergruppe des (Meth)acrylats bzw. an die Amidgruppe des (Meth)acrylamids gebundenen, gegebenenfalls substituierten aromatischen Rest tragen, verleiht den erfindungsgemäßen Polymerzusammensetzungen und insbesondere deren Konzentraten verschiedene vorteilhafte Eigenschaften.

Die erfindungsgemäßen Polymerzusammensetzungen und insbesondere ihre Konzentrate in organischen Lösemitteln sind trotz eines vergleichsweise hohen Wirkstoffgehalts niedrig viskose Flüssigkeiten. So liegt beispielweise die Temperatur unterhalb derer z.B. 35 Gew.-%ige Konzentrate der erfindungsgemäßen Polymerzusammensetzungen eine Viskosität von mehr als 1.000 mPas annehmen deutlich unterhalb der von vergleichbaren Polymerzusammensetzungen, die kein (Meth)acrylsäurederivat, das einen aromatischen Rest trägt, einpolymerisiert enthalten. Der niedrige Eigenstockpunkt der Konzentrate erlaubt ihren Einsatz dementsprechend auch bei niedrigen Temperaturen von unterhalb 20 °C, wie beispielsweise unterhalb 15 °C, teilweise auch unterhalb 10 °C sowie nach Zugabe einer geringen Menge weiteren Lösemittels auch unterhalb 5 °C ohne Heizen von Vorratsbehälter und/oder Förderleitungen. Sie lassen sich somit auch unter ungünstigen klimatischen Bedingungen wie beispielsweise in arktischen Gebieten wie auch bei off-shore-Anwendungen ohne weitere Vorkehrungen gegen das Stocken der Additive einsetzen. Auch eine Applikation down-the-hole ist ohne extremes Verdünnen der Additive und ohne Beheizen der Förderleitungen möglich. Alternativ können bei gleicher Temperatur höher konzentrierte Polymerzusammensetzungen transportiert und eingesetzt werden, wodurch Lager- und Transportvolumen reduziert werden.

Überraschenderweise wird dabei wird die Wirksamkeit als Pour Point Depressant (Stockpunkterniedriger) für paraffinhaltige Kohlenwasserstofföle im Gegensatz zu den von WO 2014/095412 und WO 2017/108361 vorgeschlagenen Lösungen nicht beeinträchtigt; meistens wird sie sogar verbessert. Zudem besitzen die erfindungsgemäßen Polymerzusammensetzungen eine gegenüber gepfropften Poly(alkyl(meth)acrylaten) des Standes der Technik eine verbesserte Einmischbarkeit in paraffinhaltige Kohlenwasserstofföle. Dies führt zu einer schnelleren Entfaltung der Wirksamkeit des Additivs und macht ein intensives Einmischen entbehrlich.

Neben dem Einsatz der erfindungsgemäßen Polymerzusammensetzungen als solche oder als Konzentrat können sie auch in Kombination mit weiteren Wirkstoffen für den gleichen oder andere Zwecke formuliert und eingesetzt werden. Beispielsweise kann man der Formulierung zusätzliche, sich in ihrer chemischen Natur von den erfindungsgemäßen Polymerzusammensetzungen unterscheidende WachsDispergatoren zusetzen, die gebildete Paraffin-Kristalle stabilisieren und verhindern, dass diese sedimentieren. Als Wachsdispergatoren können beispielsweise Alkylphenole, Alkylphenol-Formaldehyd-Harze und/oder Dodecylbenzolsulfonsäure eingesetzt werden. Weiterhin können die erfindungsgemäßen Polymerzusammensetzungen zusammen mit Asphaltendispergatoren eingesetzt werden, die eine Ausfällung von polyzyklischen Kohlenwasserstoffen verhindern.

### Beispiele

Die für die Herstellung der erfindungsgemäßen Polymerzusammensetzungen wie auch für die Herstellung der Vergleichsmuster eingesetzten Rohstoffe sind in Tabelle 1 aufgelistet. Das Molekulargewicht der eingesetzten Acrylate wurde auf Basis der OH-Zahl der zur Herstellung der Ester eingesetzten Alkohole bestimmt. Dazu wurden die in der betreffenden Probe enthaltenen Hydroxylgruppen mit Essigsäureanhydrid acetyliert. Das überschüssige Essigsäureanhydrid wurde hydrolysiert und die entstehende Essigsäure mit Kaliumhydroxid-Standardlösung potentiometrisch titriert. Der Schmelzflussindex MFI der Ethylen-Copolymere wurde gemäß ISO 1133 bei 190 °C und einer Auflagekraft von 2,16 kg bestimmt. Prozentangaben beziehen sich, sofern nicht anders angegeben, auf Gewichtsanteile.

**Tabelle 1: Für die Herstellung der Polymerzusammensetzungen eingesetzte Rohstoffe**

| | |
|---|---|
| EVA 1 | Ethylen-Vinylacetat-Copolymer aus 72 Gew.-% Ethylen und 28 Gew.-% Vinylacetat; MFI (@190 °C / 2,16 kg) 6 g/10 min. |
| EVA 2 | Ethylen-Vinylacetat-Copolymer aus 72 Gew.-% Ethylen und 28 Gew.-% Vinylacetat; MFI (@190 °C/2,16 kg) 40 g/10 min. |
| BA 1 | Technische Mischung von Alkylacrylaten mit linearem Alkylrest, enthaltend als Hauptkomponenten 57,9 Gew.-% C₁₈-, 7,9 Gew.-% C₂₀- und 34,2 Gew.-% C₂₂-Alkylacrylat. Das mittlere Molekulargewicht lag bei 345 g/mol |
| BA 2 | Technische Mischung von Alkylacrylaten mit linearem Alkylrest, enthaltend als Hauptkomponenten 34,8 Gew.-% C₁₈-, 10,9 Gew.-% C₂₀- und 54,3 Gew.-% C₂₂-Alkylacrylat. Das mittlere Molekulargewicht lag bei 356 g/mol. |
| BNZA | Benzylacrylat |
| BNAA | Benzylacrylamid |
| t-BA | tert.-Butylacrylat |
| SPEA | Acrylsäureester eines ethoxylierten Tristrylphenols mit mittlerem Ethoxylierungsgrad von 3,7. Das mittlere Molekulargewicht des Esters betrug 593 g/mol |
| NPEA | Acrylsäureester eines ethoxylierten Nonylphenyls mit mittlerem Ethoxylierungsgrad von 4,0. Das mittlere Molekulargewicht des Esters betrug 395 g/mol |
| BPEA | Acrylsäureester eines ethoxylierten Tributylphenols mit mittlerem Ethoxylierungsgrad von 4,0. Das mittlere Molekulargewicht des Esters betrug 505 g/mol |

### Allgemeine Herstellvorschrift

Die zur Herstellung der erfindungsgemäßen Polymerzusammensetzungen wie auch der Vergleichsbeispiele eingesetzten Ester der Tabelle 1 wurden durch Veresterung der zugrunde liegenden Alkohole mit Acrylsäure in Xylol unter azeotropem Entfernen von Reaktionswasser hergestellt. Bei Benzylacrylamid und ter.-Butylacrylat handelte es sich um kommerziell erhältliche Produkte.

Zur Herstellung der Polymerzusammensetzungen wurden sodann 128,4 g einer Mischung aus EVA-Copolymer und Acrylat bzw. Acrylamid gemäß den in Tabelle 2 angegebenen Gewichtsverhältnissen und Zusammensetzungen des Acrylats in 86,8 g Xylol (Isomerengemisch) in einem 500 ml Mehrhalskolben, bestückt mit KPG-Rührer, Innenthermometer, Stickstoffeinleitung, Rückflusskühler, Vakuumanschluss und Septum, unter Rühren bei einer Temperatur von 65 °C gemischt. Nach 2-stündigem Rühren wurde das Reaktionsgemisch zur Inertisierung 3-mal auf einen Innendruck von 120 mbar evakuiert und mit Stickstoff belüftet. Anschließend wurde das Reaktionsgefäß auf 120 mbar Innendruck evakuiert. Bei einer Innentemperatur von 65 °C wurden 0,09 g Azobis(isobutyronitril) (AIBN) gelöst in 1,1 g Xylol (Isomerengemisch) über das Septum mittels einer Spritze hinzugegeben. Nach einer halben Stunde wurde eine weitere Portion AIBN (0,35 g) gelöst in 2,59 g Xylol hinzudosiert. Es wurde weitere 4 Stunden bei 65 °C gerührt, bevor das Reaktionsgemisch mit Stickstoff belüftet und für eine weitere Stunde bei einer Innentemperatur von 95 °C gerührt wurde. Abschließend wurde das Reaktionsgemisch auf 65 °C abgekühlt und mit 148 g Xylol verdünnt.

Die erhaltenen Polymerzusammensetzungen wiesen einen Feststoffgehalt von 35 ± 1 Gew.-% auf. Die Bestimmung des Feststoffgehalts erfolgte durch Trocknen eines Aliquots der Polymerzusammensetzung über 2 Stunden bei 140 °C und 100 mbar. An den erhaltenen Polymerzusammensetzungen wurde die dynamische Viskosität gemäß DIN ISO 3219 gemessen und dabei die Temperatur bestimmt, bei der die Viskosität der Probe 1.000 mPas beträgt. Der Eigenstockpunkt des Produkts gemäß DIN ISO 3016 bestimmt. Die ermittelten Werte sind in Tabelle 2 wiedergegeben.

**Tabelle 2: Charakterisierung der Polymerzusammensetzungen**

| Polymer | EVA-Copolymer | Acrylat | Zusammensetzung Acrylat | | Temperatur @ | Pour Point |
|---|---|---|---|---|---|---|
| | [Gew.-%] | [Gew.-%] | linear (Ai) [mol-%] | aromatisch (Aii) [mol-%] | 1000 mPas [°C] | [°C] |
| P1 | 24,9 (EVA1) | 75,1 | 94,8 (BA1) | 5,2 (BNZA) | 18,4 | 21 |
| P2 | 25,3 (EVA1) | 74,7 | 88,7 (BA1) | 11,3 (BNZA) | 15,1 | 18 |
| P3 | 25,1 (EVA1) | 74,9 | 77,8 (BA1) | 22,7 (BNZA) | 12,5 | 12 |
| P4 (Vgl.) | 25,1 (EVA1) | 74,9 | 70,8 (BA1) | 29,2 (BNZA) | 10,9 | 9 |
| P5 | 25,8 (EVA1) | 74,2 | 93,9 (BA1) | 6,1 (TPEA) | 15,6 | 18 |
| P6 | 25,8 (EVA1) | 74,2 | 91,2 (BA1) | 8,9 (NPEA) | 14,5 | 18 |
| P7 | 26,3 (EVA1) | 73,7 | 42,6 (BA1) | 25,4 (NPEA) | 13,4 | 15 |
| P8 | 25,6 (EVA1) | 74,4 | 83,2 (BA1) | 16,8 (BNAA) | 15,8 | 18 |
| P9 | 25,8 (EVA1) | 74,2 | 93,1 (BA1) | 6,9 (BPEA) | 14,2 | 18 |
| P11 (Vgl.) | 25,3 (EVA1) | 74,7 | 80,4 (BA1) | 19,6 (t-BA) | 13,0 | 12 |
| P12 (Vgl.) | 25,5 (EVA1) | 74,5 | 35,6 (BA1) | 64,4 (BNZA) | 10,1 | 9 |
| P13 (Vgl.) | 26,8 (EVA1) | 73,2 | 53,2 (BA1) | 46,8 (NPEA) | 11,4 | 12 |
| P14 (Vgl.) | 25,2 (EVA1) | 74,8 | 100,0 (BA1) | - | 19,8 | 24 |
| P15 | 19,7 (EVA2) | 80,3 | 90,2 (BA1) | 9,8 (BNZA) | 14,3 | 15 |
| P16 | 20,2 (EVA2) | 79,8 | 85,0 (BA1) | 15,0 (BNAA) | 16,1 | 18 |
| P17 (Vgl.) | 20,0 (EVA2) | 80,0 | 100,0 (BA1) | - | 19,0 | 21 |
| P18 | 25,3 (EVA1) | 74,7 | 95,4 (BA2) | 4,6 (BNZA) | | 24 |
| P19 | 25,9 (EVA1) | 74,1 | 90,8 (BA2) | 9,2 (NPEA) | 18,7 | 21 |
| P20 | 25,9 (EVA1) | 74,1 | 93,3 (BA2) | 6,7 (BPEA) | 19,6 | 24 |
| P21 (Vgl.) | 25,2 (EVA1) | 74,8 | 100,0 (BA2) | - | 22,1 | 27 |

| | | | | | | |
|---|---|---|---|---|---|---|
| *) Viskosität und Pour Point der Polymerzusammensetzungen wurden in 35 ± 1 Gew.-%igen Lösungen der Polymere in Xylol bestimmt. | | | | | | |

Für die Bestimmung ihrer Wirksamkeit wurden die Polymerzusammensetzungen Rohölen zugesetzt und die dadurch erzielte Stockpunktabsenkung (Pour Point gemäß ASTM D97) des Öls bestimmt. Bei den zur Prüfung herangezogenen Testölen handelte es sich sowohl um wachsreiche wie auch um asphaltenreiche Rohöle. Die Charakterisierung der verwendeten Rohöle ist in Tabelle 3 wiedergegeben. Die Zusammensetzung der Öle wurde mittels SARA-Analyse gemäß IP 469-01 vorgenommen. Dabei wurden die Anteile der Rohöle an gesättigten Kohlenwasserstoffen (Saturates), Aromaten (Aromatics), Harzen (Resins) und Asphaltenen (Asphaltenes) bestimmt. Die in den Rohölen A bis E erzielten Stockpunkte sind in den Tabellen 4 bis 8 wiedergegeben. Die angegebenen Dosierraten beziehen sich auf die Menge an zugesetzter Polymerzusammensetzung gemäß Tabelle 2.

**Tabelle 3: Charakterisierung der eingesetzten Testöle**

| | Rohöl A | Rohöl B | Rohöl C | Rohöl D | Rohöl E |
|---|---|---|---|---|---|
| *S*(aturates) | 52 % | 60 % | 74 % | 71 % | 48 % |
| *A*(romatics) | 24 % | 23 % | 13 % | 15 % | 23 % |
| *R*(esins) | 7 % | 13 % | 4 % | 4 % | 27 % |
| *A*(spalthenes) | 17 % | 4 % | 9 % | 10 % | 2 % |
| Pour Point | 27 °C | 24 °C | 27 °C | 27 °C | 30 °C |

**Tabelle 4: Pour Point-Absenkung in Testöl A**

| Beispiel | Polymer; Dosierrate | Pour Point |
|---|---|---|
| 1 (Vgl) | - | 27 °C |
| 2 | P1; 1000 ppm | 9 |
| 3 | P2; 1000 ppm | 9 |
| 4 | P3; 1000 ppm | 6 |
| 5 | P4; 1000 ppm | 9 |
| 6 (Vgl.) | P12; 1000 ppm | 15 |
| 7 (Vgl.) | P14; 1000 ppm | 9 |
| 8 (Vgl.) | P11; 1000ppm | 18 |

**Tabelle 5: Pour Point-Absenkung in Testöl B**

| Beispiel | Polymer; Dosierrate | Pour Point |
|---|---|---|
| 9 (Vgl.) | - | 24 °C |
| 10 | P3; 500 ppm | 6 |
| 11 | P7; 500 ppm | 6 |
| 12 | P8; 500 ppm | 12 |
| 13 | P6; 500 ppm | 9 |
| 14 (Vgl.) | P14; 500 ppm | 12 |

**Tabelle 6: Pour Point-Absenkung in Testöl C**

| Beispiel | Polymer; Dosierrate | Pour Point |
|---|---|---|
| 15 (Vgl.) | - | 27 °C |
| 16 | P3; 1200 ppm | 9 |
| 17 | P6; 1200 ppm | 12 |
| 18 | P7; 1200 ppm | 9 |
| 19 (Vgl.) | P13; 1200 ppm | 18 |
| 20 | P19; 1200 ppm | 9 |
| 21 (Vgl.) | P14; 1200 ppm | 12 |

**Tabelle 7: Pour Point-Absenkung in Testöl D**

| Beispiel | Polymer; Dosierrate | Pour Point |
|---|---|---|
| 22 (Vgl.) | - | 27 °C |
| 23 | P15; 1200 ppm | 9 |
| 24 | P16; 1200 ppm | 12 |
| 25 (Vgl.) | P17; 1200 ppm | 15 |

**Tabelle 8: Pour Point-Absenkung in Testöl E**

| Beispiel | Polymer; Dosierrate | Pour Point |
|---|---|---|
| 26 (Vgl.) | - | 30 |
| 27 | P18; | 12 |
| 28 | P19; | 12 |
| 29 | P20; | 15 |
| 30 (Vgl.) | P21; 1000 ppm | 18 |
| 31 (Vgl.) | P11; 1000 ppm | 21 |

Die in ähnlichem Zusammenhang vorgeschlagenen kurzkettigen bzw. verzweigten Alkylacrylate der WO 2014/095412 senken zwar ebenfalls den Eigenstockpunkt der Additive, sind jedoch auf Grund ihrer chemischen Struktur nicht zur Wechselwirkung mit den aus dem additivierten Öl ausfallenden Bestandteilen befähigt und schwächen somit die Wirksamkeit der Additive in stärkerem Ausmaß als dies mit den einen aromatischen Rest tragenden Comonomeren der Fall ist.

## Patentansprüche

1. Polymerzusammensetzung, erhältlich durch radikalische Polymerisation von
A) 95 - 40 Gew.-% einer Monomermischung, enthaltend
Ai) 65 - 99 Gew.-% mindestens Alkyl(meth)acrylats mit einem linearen C₁₆-C₄₀-Alkylrest und
Aii) 1 - 35 Gew.-% mindestens eines aus (Meth)acrylaten und (Meth)acrylamiden ausgewählten Comonomers, das einen über eine Alkylen-, Alkenylen-, Oxyalkylen- oder Polyoxyalkylengruppe an die Estergruppe des (Meth)acrylats bzw. an die Amidgruppe des (Meth)acrylamids gebundenen, gegebenenfalls substituierten aromatischen Rest trägt,
in Gegenwart von
B) 5 - 60 Gew.-% mindestens eines Ethylen-Copolymers.

2. Polymerzusammensetzung gemäß Anspruch 1, wobei das Comonomer Aii die allgemeine Formel (2) 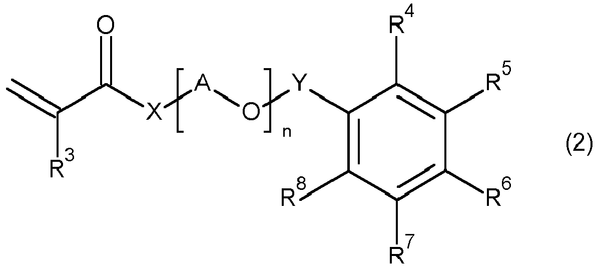 aufweist, worin
R³ für Wasserstoff oder Methyl,
R⁴, R⁵, R⁶, R⁷ und R⁸ unabhängig voneinander für Wasserstoff, einen C₁-C₂₀-Alkylrest, einen C₁-C₄-Alkylarylrest, einen Oxy-C₁-C₆-alkylrest oder eine Cyano-, Nitro-, Halogen- oder Sulfonatgruppe,
X für Sauerstoff oder NR⁹,
A für einen Alkylenrest mit 2 bis 6 C-Atomen,
n für 0 oder eine ganze Zahl von 1 bis 10, mit der Maßgabe, dass wenn n = 1 ist Y keine Einfachbindung zwischen dem aromatischen System und dem Sauerstoff der Oxalkylengruppe bedeutet,
Y für eine Alkylengruppe mit 1 bis 10 C-Atomen, eine Alkenylengruppe mit 3 bis 10 C-Atomen, eine Carbonylgruppe, für eine Gruppe der Formel -C(=O)-R¹⁰-, für eine Einfachbindung zwischen dem aromatischen System und dem Sauerstoff der Oxalkylengruppe bzw. der Polyoxyalkylengruppe oder, wenn n für 0 steht, für eine Einfachbindung zwischen dem aromatischen System und X,
R⁹ für Wasserstoff oder einen C₁-C₂₀-Alkylrest und
R¹⁰ für eine Einfachbindung, eine Alkylengruppe mit 1 bis 6 C-Atomen oder eine Alkenylengruppe mit 3 bis 6 C-Atomen steht.

3. Polymerzusammensetzung gemäß Anspruch 1 und/oder 2, wobei das Comonomer Aii die allgemeine Formel 2a 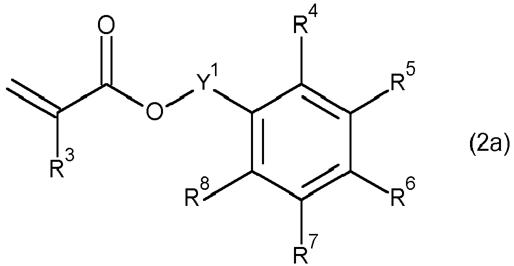 aufweist, worin
R³ für Wasserstoff oder Methyl,
R⁴, R⁵, R⁶, R⁷ und R⁸ unabhängig voneinander für Wasserstoff, einen C₁-C₂₀-Alkylrest, einen Alkylarylrest, einen Oxy-C₁-C₆-alkylrest oder eine Cyano-, Nitro-, Halogen- oder Sulfonatgruppe,
Y¹ für eine Alkylengruppe mit 1 bis 10 C-Atomen oder eine Alkenylengruppe mit 3 bis 10 C-Atomen steht.

4. Polymerzusammensetzung gemäß Anspruch 1 und/oder 2, wobei das Comonomer Aii die allgemeine Formel 2b 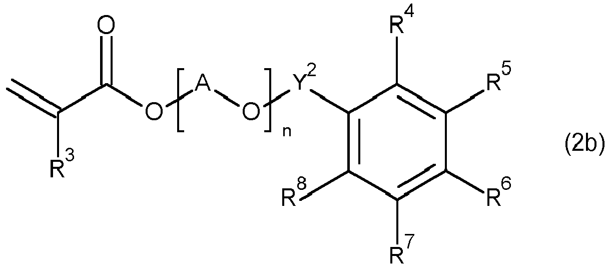 aufweist, worin
R³ für Wasserstoff oder Methyl,
R⁴, R⁵, R⁶, R⁷ und R⁸ unabhängig voneinander für Wasserstoff, einen C₁-C₂₀-Alkylrest, einen Alkylarylrest, einen Oxy-C₁-C₆-alkylrest oder eine Cyano-, Nitro-, Halogen- oder Sulfonatgruppe,
A für einen Alkylenrest mit 2 bis 6 C-Atomen,
n für eine ganze Zahl von 2 bis 10 und
Y² für eine Einfachbindung zwischen dem aromatischen System und dem Sauerstoff der Polyoxyalkylengruppe, für eine Alkylengruppe mit 1 bis 10 C-Atomen oder eine Alkenylengruppe mit 3 bis 10 C-Atomen steht.

5. Polymerzusammensetzung gemäß Anspruch 1 und/oder 2, wobei das Comonomer Aii die allgemeine Formel 2c 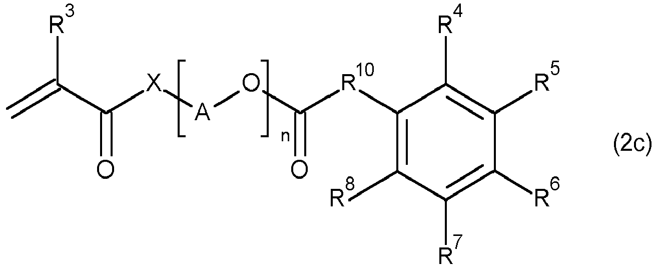 aufweist, worin
R³ für Wasserstoff oder Methyl,
R⁴, R⁵, R⁶, R⁷ und R⁸ unabhängig voneinander für Wasserstoff, einen C₁-C₂₀-Alkylrest, einen C₁-C₄-Alkylarylrest, einen Oxy-C₁-C₆-alkylrest oder eine Cyano-, Nitro-, Halogen- oder Sulfonatgruppe,
X für Sauerstoff oder NR⁹,
A für einen Alkylenrest mit 2 bis 6 C-Atomen,
n für eine ganze Zahl von 1 bis 10 steht,
Y für eine Alkylengruppe mit 1 bis 10 C-Atomen, eine Alkenylengruppe mit 3 bis 10 C-Atomen, eine Carbonylgruppe, für eine Gruppe der Formel -C(=O)-R¹⁰-, für eine Einfachbindung zwischen dem aromatischen System und dem Sauerstoff der Oxalkylengruppe bzw. der Polyoxyalkylengruppe oder, wenn n für 0 steht, für eine Einfachbindung zwischen dem aromatischen System und X,
R⁹ für Wasserstoff oder einen C₁-C₂₀-Alkylrest und
R¹⁰ für eine Einfachbindung, eine Alkylengruppe mit 1 bis 6 C-Atomen oder eine Alkenylengruppe mit 3 bis 6 C-Atomen steht.

6. Polymerzusammensetzung gemäß einem oder mehreren der Ansprüche 1 bis 5, wobei das Comonomer Aii der Ester von Acrylsäure oder Methacrylsäure mit einer eine Hydroxylgruppe tragenden aromatischen Verbindung der Formel (3) ist, 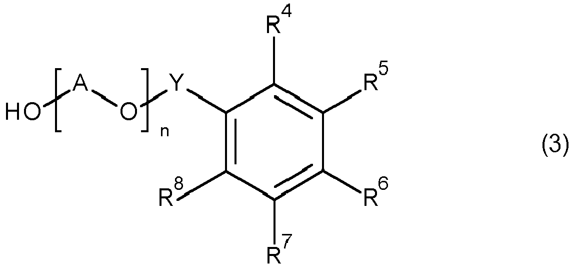 worin
R⁴, R⁵, R⁶, R⁷ und R⁸ unabhängig voneinander für Wasserstoff, einen C₁-C₂₀-Alkylrest, einen C₁-C₄-Alkylarylrest, einen Oxy-C₁-C₆-alkylrest oder eine Cyano-, Nitro-, Halogen- oder Sulfonatgruppe,
A für einen Alkylenrest mit 2 bis 6 C-Atomen,
n für eine ganze Zahl von 1 bis 10 steht, mit der Maßgabe, dass wenn n = 1 ist Y keine Einfachbindung zwischen dem aromatischen System und dem Sauerstoff der Oxalkylengruppe bedeutet,
Y für eine Alkylengruppe mit 1 bis 10 C-Atomen, eine Alkenylengruppe mit 3 bis 10 C-Atomen, eine Carbonylgruppe, für eine Gruppe der Formel -C(=O)-R¹⁰-, für eine Einfachbindung zwischen dem aromatischen System und dem Sauerstoff der Oxalkylengruppe bzw. der Polyoxyalkylengruppe oder, wenn n für 0 steht, für eine Einfachbindung zwischen dem aromatischen System und X.

7. Polymerzusammensetzung gemäß einem oder mehreren der Ansprüche 1 bis 6, **dadurch gekennzeichnet, dass** das Alkyl(meth)acrylat Ai die allgemeine Formel (1)
H₂C = C(R¹) - COOR² (1)
aufweist, wobei
R¹ für H oder eine Methylgruppe, und bevorzugt für H, steht und
R² für einen linearen Alkylrest mit 16 bis 40 Kohlenstoffatomen, bevorzugt mit 18 bis 26 Kohlenstoffatomen, steht.

8. Polymerzusammensetzung gemäß einem oder mehreren der Ansprüche 1 bis 7, wobei das Monomer Ai ein Ester der Acrylsäure ist.

9. Polymerzusammensetzung gemäß einem oder mehreren der Ansprüche 1 bis 8, **dadurch gekennzeichnet, dass** die Monomermischung A) 65 bis 99 Gew.-%, vorzugsweise 70 bis 95 Gew.-%, mindestens eines Alkyl(meth)acrylats Ai, bezogen auf das Gesamtgewicht von A), enthält.

10. Polymerzusammensetzung gemäß einem oder mehreren der Ansprüche 1 bis 9, **dadurch gekennzeichnet, dass** das Monomermischung A) 1 bis 35 Gew.-%, vorzugsweise 2 bis 30 Gew.-%, mindestens eines Comonomers Aii, bezogen auf das Gesamtgewicht von A), enthält.

11. Polymerzusammensetzung gemäß einem oder mehreren der Ansprüche 1 bis 10, **dadurch gekennzeichnet, dass** das Monomermischung A) bis zu 20 Gew.-%, eines oder mehrerer weiterer Monomere Aiii enthält.

12. Polymerzusammensetzung gemäß Anspruch 11, **dadurch gekennzeichnet, dass** Aiii ausgewählt ist aus ethylenisch ungesättigten Estern der Formeln (4) und (5),
H₂C = C(R¹) - COOR¹¹ (4) 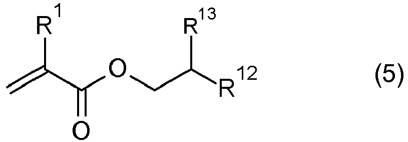
wobei
R¹ für Wasserstoff oder Methyl,
R¹¹ für einen linearen Alkylrest mit 1 bis 11 C-Atomen, für einen verzweigten Alkylrest mit 4 bis 17 Kohlenstoffatomen oder für einen zyklischen Alkylrest mit 5 bis 20 Kohlenstoffatomen und
R¹² und R¹³ unabhängig voneinander für einen gesättigten, linearen Alkylrest mit 6 bis 20 C-Atomen stehen und die Summe der Kohlenstoffatome in R¹² und R¹³ zwischen 16 und 40 liegt.

13. Polymerzusammensetzung gemäß Anspruch 11 und/oder 12, **dadurch gekennzeichnet, dass** Aiii ausgewählt ist aus der Gruppe bestehend aus
a) Vinylestern von Carbonsäuren mit 1 bis 20 C-Atomen,
b) α-Olefinen mit 6 bis 40 C-Atomen,
c) Vinylaromaten,
d) ethylenisch ungesättigten Dicarbonsäuren sowie deren Anhydriden und Estern mit C₁₀-C₃₀-Fettalkoholen,
e) Acrylsäure,
f) Methacrylsäure,
g) weiteren, funktionelle Gruppen tragenden ethylenisch ungesättigten Verbindungen.

14. Polymerzusammensetzung gemäß einem oder mehreren der Ansprüche 1 bis 13, wobei das Ethylen-Copolymer B) neben Ethylen 4 bis 18 mol-% mindestens eines Vinylesters, Acrylsäureesters, Methacrylsäureesters, Alkylvinylethers und/oder Alkens enthält.

15. Polymerzusammensetzung gemäß einem oder mehreren der Ansprüche 1 bis 14, wobei das Ethylen-Copolymer B) ein Copolymer aus Ethylen und dem Vinylester einer C₁-C₂₄-Carbonsäure, eines C₁-C₂₂-Alkyl(meth)acrylats und/oder eines C₃-C₂₄-Olefins ist.

16. Polymerzusammensetzung gemäß einem oder mehreren der Ansprüche 1 bis 15, wobei das Ethylen-Copolymer B) ein Copolymer aus Ethylen und mindestens einem Vinylester der Formel (5) ist
CH₂ = CH - OCOR¹³ (5)
worin
R¹³ C₁- bis C₃₀-Alkyl, vorzugsweise C₄- bis C₁₆-Alkyl, speziell C₆- bis C₁₂-Alkyl bedeutet.

17. Polymerzusammensetzung gemäß einem oder mehreren der Ansprüche 1 bis 16, wobei das Ethylen-Copolymer B) als Comonomer Vinylacetat enthält.

18. Polymerzusammensetzung gemäß einem oder mehreren der Ansprüche 1 bis 17 wobei das Ethylen-Copolymer B) ein Copolymer aus Ethylen und mindestens einem Acrylsäure- oder Methacrylsäureester der Formel (6) ist
CH₂ = CR₁₄-COOR¹⁵ (6)
worin
R¹⁴ Wasserstoff oder Methyl, und
R¹⁵ C₁- bis C₃₀-Alkyl, vorzugsweise C₄- bis C₁₆-Alkyl, speziell C₆- bis C₁₂-Alkyl bedeutet.

19. Polymerzusammensetzung gemäß einem oder mehreren der Ansprüche 1 bis 18, wobei das Ethylen-Copolymer B) einen gemäß DIN 53735 bei 190 °C und einer Auflagekraft von 2,16 kg gemessenen MFI190-Wert zwischen 0,1 und 1.200 g/10 min, und vorzugsweise zwischen 1 und 900 g/min aufweist.

20. Verfahren zur Absenkung des Eigenstockpunkts von Polymerzusammensetzungen, indem
A) 95 - 40 Gew.-% einer Monomermischung, die mindestens ein Alkyl(meth)acrylat mit einem linearen C₁₆-C₄₀-Alkylrest in einer Menge von 65-99 Gew.-%, bezogen auf das Gesamtgewicht der Monomermischung A), enthält, in Gegenwart von
B) 5 - 60 Gew.-% mindestens eines Ethylen-Copolymers, radikalisch polymerisiert wird, **dadurch gekennzeichnet,**
**dass** der Monomermischung A) 1 bis 35 Gew.-%, bezogen auf das Gesamtgewicht der Monomermischung A), mindestens eines aus (Meth)acrylaten und (Meth)acrylamiden ausgewählten Comonomers Aii, das einen über eine Alkylen-, Alkenylen-, Oxyalkylen- oder Polyoxyalkylengruppe an die Estergruppe des (Meth)acrylats bzw. die Amidgruppe des (Meth)acrylamids gebundenen, gegebenenfalls substituierten aromatischen Rest trägt, vor der radikalischen Polymerisation zugesetzt werden.

21. Verfahren zur Herstellung von Polymerzusammensetzungen gemäß Anspruch 1, indem
A) 95 - 40 Gew.-% einer Monomermischung, enthaltend
Ai) 65 - 99 Gew.-% mindestens Alkyl(meth)acrylats mit einem linearen C₁₆-C₄₀-Alkylrest und
Aii) 1 - 35 Gew.-% mindestens eines aus (Meth)acrylaten und (Meth)acrylamiden ausgewählten Comonomers, das einen über eine Alkylen-, Alkenylen-, Oxyalkylen- oder Polyoxyalkylengruppe an die Estergruppe des (Meth)acrylats bzw. an die Amidgruppe des (Meth)acrylamids gebundenen, gegebenenfalls substituierten aromatischen Rest trägt,
in Gegenwart von
B) 5 - 60 Gew.-% mindestens eines Ethylen-Copolymers, und gegebenenfalls eines organischen Lösemittels, durch Zugabe eines Radikalkettenstarters polymerisiert wird.

22. Verfahren nach Anspruch 21, bei dem die Polymerisation in Gegenwart der 0,1 bis 10-fachen des Gewichts an Lösemittel, bezogen auf das Gewicht von A) und B), durchgeführt wird.

23. Verfahren gemäß Anspruch 21 und/oder 22, bei dem das Lösemittel ein aliphatischer Kohlenwasserstoff oder ein aliphatisches Kohlenwasserstoffgemisch mit einem Flammpunkt von mindestens 60 °C ist.

24. Konzentrierte Polymerzusammensetzung, enthaltend
I) eine Polymerzusammensetzung gemäß einem oder mehreren der Ansprüche 1 bis 19, und
II) ein organisches Lösemittel (C).

25. Konzentrierte Polymerzusammensetzung nach Anspruch 24, enthaltend 10 bis 80 Gew.-% der Polymerzusammensetzung gemäß einem oder mehreren der Ansprüche 1 bis 19 und 90 bis 20 Gew.-% organisches Lösemittel.

26. Konzentrierte Polymerzusammensetzung nach Anspruch 24 und/oder 25, wobei das organische Lösemittel eine Mischung aus aliphatischen und aromatischen Kohlenwasserstoffen ist.

27. Konzentrierte Polymerzusammensetzung nach einem oder mehreren der Ansprüche 24 bis 26, wobei das organische Lösemittel mindestens 20 Gew.-% aromatische Kohlenwasserstoffe enthält.

28. Verwendung von Polymerzusammensetzungen gemäß einem oder mehreren der Ansprüche 1 bis 19 zur Verbesserung der Kälteeigenschaften von paraffinhaltigen Kohlenwasserstoffölen.

29. Verwendung gemäß Anspruch 28, wobei das paraffinhaltige Kohlenwasserstoffölen Rohöl ist.

30. Verwendung gemäß Anspruch 28 und/oder 29, **dadurch gekennzeichnet, dass** dem paraffinhaltigen Kohlenwasserstofföl10 bis 10.000 Gew.-ppm der Polymerzusammensetzung gemäß einem oder mehreren der Ansprüche 1 bis 19 zugesetzt werden.

31. Paraffinhaltige Kohlenwasserstofföle mit verbesserten Kälteeigenschaften enthaltend eine Polymerzusammensetzung gemäß einem oder mehreren der Ansprüche 1 bis 19.

32. Verwendung eines Comonomers Aii) zur Absenkung des Eigenstockpunkts von Polymerzusammensetzungen, welche Produkt einer Polymerisation von Alkyl(meth)acrylaten Ai) in Gegenwart von Ethylen-Copolymeren B) sind, wobei man Aii) in einer Menge von 1 bis 35 Gew.-%, bezogen auf das Gesamtgewicht der Monomermischung aus Ai) und Aii), gemeinsam mit 65 - 99 Gew.-% Ai) in einer radikalischen Polymerisation von
A) 95 - 40 Gew.-% der Monomermischung, aus Ai) und Aii), in Gegenwart von
B) 5 - 60 Gew.-% mindestens eines Ethylen-Copolymers einsetzt, und wobei
Ai) mindestens ein Alkyl(meth)acrylat mit einem linearen C₁₆-C₄₀-Alkylrest enthält, und
Aii) mindestens ein aus (Meth)acrylaten und (Meth)acrylamiden ausgewähltes Comonomer ist, das einen über eine Alkylen-, Alkenylen-, Oxyalkylen- oder Polyoxyalkylengruppe an die Estergruppe des (Meth)acrylats bzw. die Amidgruppe des (Meth)acrylamids gebundenen, gegebenenfalls substituierten aromatischen Rest trägt.
